(19) Europäisches Patentamt / European Patent Office / Office européen des brevets

(11) **EP 2 254 067 A1**

(12) **DEMANDE DE BREVET EUROPEEN**

(43) Date de publication:
**24.11.2010 Bulletin 2010/47**

(51) Int Cl.:
***G06F 17/50*** *(2006.01)*

(21) Numéro de dépôt: **10161730.6**

(22) Date de dépôt: **03.05.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **18.05.2009 FR 0953268**

(71) Demandeur: **Airbus Operations (Société par actions simplifiée)**
**31060 Toulouse (FR)**

(72) Inventeur: **Minot, Frédéric**
**31810 Venerque (FR)**

(74) Mandataire: **Augarde, Eric et al**
**BREVALEX**
**56 Boulevard de l'Embouchure,**
**Bât. B**
**B.P. 27519**
**31075 Toulouse Cedex 2 (FR)**

(54) **Méthode d'optimisation d'une plateforme avionique**

(57) L'invention concerne une méthode d'optimisation de la plateforme avionique d'un aéronef destinée à implémenter un ensemble de fonctions avioniques. L'association entre les éléments de l'architecture fonctionnelle (fonctions, liens fonctionnels) de la plateforme et les éléments de son architecture matérielle (équipements, chemins réseau, liaisons physiques directes) sont formalisés par des jeux de contraintes sous formes d'inéquations linéaires de variables de décision. Certaines contraintes fonctionnelles de ségrégation ou de collocation sont également envisagées. L'optimisation de la plateforme avionique est obtenue par minimisation de fonctions de coût dépendant linéairement desdites variables de décision. Cette minimisation sous contraintes est obtenue de manière efficace par l'algorithme du simplexe.

Fig. 4

**Description**

## DOMAINE TECHNIQUE

La présente invention concerne de manière générale le domaine des plateformes avioniques et plus précisément celles qui sont réalisées selon une architecture modulaire intégrée, dite IMA (*Integrated Modular Avionics*).

## ÉTAT DE LA TECHNIQUE ANTÉRIEURE

La réalisation d'une plateforme avionique, c'est-à-dire de l'ensemble des moyens de calcul et de communication embarqués permettant d'exécuter les fonctions d'un aéronef fait traditionnellement appel à des calculateurs et des bus de communication dédiés. Dans une telle plateforme, chaque fonction de l'aéronef, dénommée ci-après fonction avionique, est implémentée à l'aide de calculateurs ayant une architecture et des entrées-sorties spécifiques à la réalisation de la fonction. Ceci implique de réaliser, certifier et maintenir un grand nombre de composants ou LRUs (*Line Replaceable Units*), et ce à chaque fois qu'un nouveau type d'appareil doit être conçu.

Pour remédier à cette source de complexité et de coûts, les plateformes avioniques de nouvelle génération utilisent, autant que faire se peut, une architecture modulaire intégrée (IMA). Dans ce type d'architecture, les fonctions avioniques sont implémentées dans des ressources partagées, en pratique sous forme de modules logiciel hébergés par des calculateurs génériques, et utilisant des moyens de communication non dédiés. Une telle plateforme présente de nombreux avantages en termes de réduction de la quantité de calculateurs, du nombre de types différents de calculateurs, de nombre de câbles, etc., ce qui se traduit en définitive par un bilan de masse plus favorable et d'importants gains en matière de maintenance et de gestion des stocks.

Toutefois, alors que les plateformes avioniques traditionnelles étaient réalisées de manière empirique, à l'aide de règles fondées sur l'expérience et en procédant par de nombreux allers-retours entre phase de conception et phase de validation, les plateformes de nouvelle génération requièrent une approche entièrement différente, tant en raison de leur complexité que du partage de ressources entre fonctions avioniques, inhérent à l'architecture IMA. Par exemple, alors que les défaillances matérielles concomitantes d'éléments fonctionnels étaient autrefois évitées en utilisant des ressources de calcul et de communication dédiées, l'architecture IMA ne permet pas de garantir cette robustesse de manière intrinsèque. Il est donc nécessaire de répartir judicieusement les modules logiciel dans les calculateurs génériques et de s'assurer que les moyens de communication permettent d'assurer les échanges entre ces modules. Qui plus est, l'optimisation de la répartition des modules logiciel parmi les différents calculateurs, d'une part, et celle du routage des liens fonctionnels assurant les échanges entre ces modules logiciel, tout en respectant un certain nombre de contraintes prédéterminées, est d'une grande complexité combinatoire. Dès lors que la plateforme avionique comprend un nombre important de calculateurs et de noeuds de réseau de communication, l'optimisation de la plateforme ne peut plus être assurée par des algorithmes de type force brute. En outre, la solution retenue ne permet pas en général de remplir certain nombre de critères d'implémentation tels que celui de la minimisation du nombre et de la longueur des chemins de routage dans le ou les réseau(x) de communication de la plateforme.

La présente invention a par conséquent pour objectif de proposer une méthode d'optimisation de l'architecture de plateforme avionique, notamment de la distribution des modules logiciel et du routage des liens fonctionnels entre ces modules, en optimisant certains critères tout en respectant un certain nombre de contraintes d'implémentation.

## EXPOSÉ DE L'INVENTION

La présente invention est définie par une méthode d'optimisation de la plateforme avionique d'un aéronef destinée à implémenter un ensemble de fonctions avioniques, chaque fonction avionique étant associée à une ou plusieurs occurrences de module logiciel, deux occurrences de module logiciel quelconques pouvant échanger des messages au moyen d'un lien, dit occurrence de lien fonctionnel, ladite plateforme avionique comprenant par ailleurs des équipements reliés entre eux par des liaisons physiques unidirectionnelles ou bidirectionnelles appartenant à différents types de réseau, des chemins permettant de relier lesdits équipements, chaque chemin étant constitué soit par une seule liaison physique directe entre un équipement source et un équipement destinataire, soit par une première liaison physique entre ledit équipement source et un premier noeud de réseau, une seconde liaison physique entre ledit équipement destinataire et un second noeud de réseau et un chemin réseau entre lesdits premier et second noeuds. Selon ladite méthode on associe, d'une part, des occurrences de lien fonctionnel à des chemins destinés à implémenter ces occurrences, au moyen d'un premier jeu de contraintes et, d'autre part, des occurrences de modules logiciel à des équipements, destinés à héberger ces occurrences, au moyen d'un second jeu de contraintes, lesdites contraintes des premier et second jeux étant formulées comme des inéquations linéaires de variables de décision, et l'on minimise une pluralité de fonctions de coût formulées comme des combinaisons linéaires d'au moins certaines desdites variables de décision pour obtenir au moins une solution optimale d'implémentation de la plateforme.

On peut également associer à chaque équipement une ou plusieurs source(s) d'énergie au moyen du dit second jeu de contraintes.

Avantageusement, on prévoit, préalablement à la minimisation des fonctions de coût, un troisième jeu de contraintes, formulées comme des inéquations linéaires de variables de décision, et permettant de colloquer ou bien de ségréguer des occurrences de lien fonctionnel au moyen d'ensembles de chemins réseau respectivement identiques et disjoints.

Le troisième jeu de contraintes permet par exemple de colloquer ou bien de ségréguer des occurrences de modules logiciel au moyen d'ensembles d'équipements respectivement identiques et disjoints.

Le troisième jeu de contraintes peut aussi permettre d'imposer que des occurrences de module logiciel soient hébergées par des équipements alimentés par des sources d'énergie identiques ou distinctes.

On peut encore prévoir, préalablement à la minimisation des fonctions de coût, un quatrième jeu de contraintes, formulées comme des inéquations linéaires de variables de décision, permettant de fixer de manière préalable le passage d'une occurrence de lien fonctionnel par un chemin réseau donné, ou l'hébergement d'une occurrence de module logiciel par un équipement donné.

Selon une première variante, les fonctions de coût sont minimisées conjointement sur un ensemble de valeurs possibles desdites variables de décision.

Selon une seconde variante, les fonctions de coût sont minimisées successivement, une première fonction de coût étant minimisée sur l'ensemble des valeurs possibles desdites variables de décision et chacune des autres fonctions de coût étant minimisée sur le sous-ensemble desdites valeurs obtenu par minimisation d'une fonction de coût précédente.

Dans le cas où au moins une fonction de coût comprend une variable de décision supplémentaire n'intervenant pas dans l'ensemble des contraintes des premier, deuxième, troisième et quatrième jeux de contraintes, on peut prévoir un cinquième jeu de contraintes sous forme d'inéquation dépendant linéairement au moins de ladite variable de décision supplémentaire.

Avantageusement, lesdites fonctions de coût appartiennent à la liste suivante :

- nombre d'équipements connectés à plusieurs réseaux de communication ;
- combinaison pondérée des nombres de noeuds de communication de différents types ;
- nombre maximum de connexions d'un noeud de communication ;
- somme des distances réelles entre les équipements et les noeuds de communication auxquels ils sont connectés ;
- nombre de sources d'énergie alimentant les différents équipements ;
- somme des taux maximum d'utilisation des ressources des équipements par les occurrences de modules logiciel ;
- nombre de chemins associés à un même lien fonctionnel ;
- longueur topologique des chemins réseau associés à un même lien fonctionnel ;
- nombre de noeuds de communication communs aux chemins réseau associés à un même lien fonctionnel ;
- nombre total de noeuds de communication utilisés par les chemins réseau associés à un même lien fonctionnel.

**BRÈVE DESCRIPTION DES DESSINS**

D'autres caractéristiques et avantages de l'invention apparaîtront à la lecture de modes de réalisation préférentiels de l'invention en référence aux figures jointes parmi lesquelles :

La Fig. 1 représente de manière schématique le principe de l'implémentation de fonctions avioniques et des liens fonctionnels dans une plateforme avionique ;
La Fig. 2 représente de manière schématique des noeuds de réseau liés par une relation de duplication ;
La Fig. 3 représente de manière schématique des noeuds de réseau liés par une relation de symétrie ;
La Fig. 4 représente de manière schématique la méthode d'optimisation de l'implémentation de plateforme avionique selon un mode de réalisation de l'invention.

**EXPOSÉ DÉTAILLÉ DE MODES DE RÉALISATION PARTICULIERS**

Nous considérerons dans la suite une plateforme avionique à réaliser selon une architecture modulaire intégrée, telle que définie précédemment. Cette plateforme est destinée à mettre en oeuvre un ensemble de fonctions avioniques prédéterminées. A titre d'exemple, ces fonctions avioniques peuvent être le contrôle du roulis, la mesure de quantité de carburant etc.

A chacune de ces fonctions avioniques, on associe en règle générale une pluralité de modules logiciel qui sont destinés à être hébergés dans des calculateurs génériques embarqués et dont chacun participe à la réalisation de la fonction. Pour des raisons de sûreté, certaines fonctions peuvent être dupliquées. Les modules logiciel de fonctions dupliquées ne sont pas nécessairement identiques. Par exemple, deux tels modules logiciel peuvent correspondre à une voie de commande (COM) et une voie de surveillance (MON) d'un système de contrôle de vol et utiliser des algorithmes différents pour réaliser la même fonction.

Les modules logiciel associés aux différentes fonctions avioniques peuvent échanger des messages entre eux via des liens, dit occurrences de lien fonctionnel. Par exemple, un module logiciel réalisant la fonction de contrôle de roulis peut transmettre un message d'alerte à un module logiciel en charge de la fonction d'affichage.

La plateforme avionique peut être représentée de manière fonctionnelle ou de manière matérielle. Dans sa représentation fonctionnelle, la plateforme comprend un certain nombre de fonctions, chaque fonction étant associée à une pluralité de modules logiciel destinés à être hébergés par des équipements de l'avion, lesdits modules logiciel pouvant échanger des messages au moyen de liens fonctionnels (plus précisément d'occurrences de lien fonctionnel comme nous le verrons plus loin).

La structure matérielle de la plateforme avionique peut être représentée par des objets de type équipement. Concrètement un équipement est une classe constituée d'éléments matériels tels que des calculateurs, des capteurs, des actuateurs, des commutateurs, des routeurs, des passerelles etc.

Concrètement, les éléments matériels de la plateforme sont des instances des objets précités. Ils peuvent être reliés entre eux par des liaisons physiques. Parmi les occurrences d'équipement, on distingue les noeuds de communications et les terminaux. On appelle ici terminal, toute occurrence d'équipement pouvant être émettrice ou destinataire d'un message sur une occurrence de lien fonctionnel. Une occurrence d'équipement émettrice (resp. destinataire) d'un message est appelée terminal source (resp. destinataire).

Les occurrences d'équipement peuvent être reliées entre elles à l'aide de liaisons physiques unidirectionnelles ou bidirectionnelles. Un terminal source et un terminal destinataire peuvent être reliés soit directement à l'aide d'une telle liaison physique soit indirectement à l'aide d'une première liaison physique entre le terminal source et un premier noeud de communication, une seconde liaison physique entre un second noeud de communication et le terminal destinataire et un chemin, dit chemin réseau, transitant à travers un ou plusieurs réseaux pour relier le premier noeud de communication et le second noeud de communication, ledit chemin comprenant au moins une liaison physique. Dans les deux cas, on appelle chemin topologique l'ensemble des liaisons physiques permettant de relier les deux terminaux. Autrement dit, dans le premier cas, le chemin topologique, qualifié de direct, est constitué d'une seule liaison physique et, dans le second cas, le chemin topologique, qualifié d'indirect, en comprend au minimum trois dont une au moins entre deux noeuds de communication.

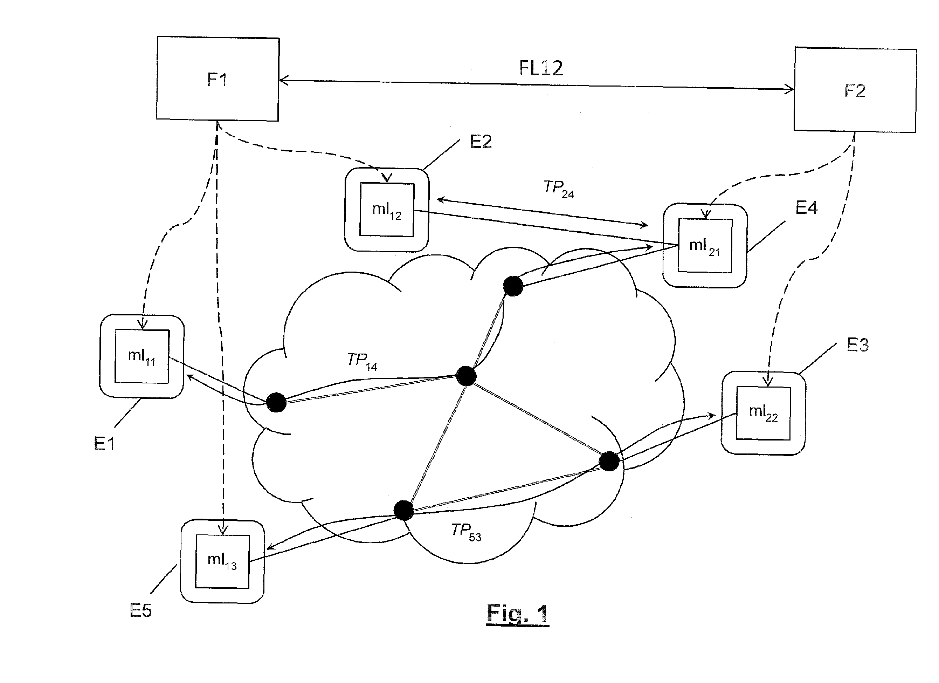

On a représenté de manière schématique en Fig. 1 le placement de modules logiciel $ml_{11},ml_{12},ml_{13}$ d'une part et $ml_{21},ml_{22}$ d'autre part, respectivement associés à deux fonctions F1 et F2, sur une pluralité de terminaux E1 à E5. Les fonctions F1 et F2 sont reliées par un lien fonctionnel FL12. Ce lien fonctionnel se traduit matériellement par les chemins topologiques $TP_{24}$, $TP_{14}$, $TP_{53}$ reliant respectivement les modules logiciel $ml_{12}$ et $ml_{21}$ ; $ml_{11}$ et $ml_{21}$, $ml_{13}$ et $ml_{22}$.

Le problème de l'optimisation de la plateforme avionique consiste notamment, pour un ensemble de fonctions données, et donc pour un ensemble de modules logiciel qui leur sont associés (chaque fonction pouvant être associée à un ou plusieurs modules logiciel), d'une part, à attribuer à chacun de ces modules un terminal dans lequel il sera hébergé et, d'autre part, à déterminer les chemins topologiques entre ces terminaux implémentant les liens fonctionnels, de sorte à optimiser un ensemble de critères. Ces critères d'optimisation seront décrits en détail plus loin. A titre d'exemple, on peut néanmoins d'ores et déjà citer la minimisation du nombre de terminaux connectés à plusieurs noeuds de communication, la minimisation du nombre maximal de connexions (à des liaisons physiques) autorisé par terminal, la minimisation des longueurs réelles des liaisons entre les terminaux et les noeuds de communication auxquels ils sont reliés, la minimisation du nombre de chemins topologiques directs entre terminaux, la minimisation des longueurs topologiques (nombre de noeuds de communication) des chemins topologiques indirects, la minimisation de la charge de calcul maximale par terminal etc. On comprendra que l'ensemble des critères d'optimisation peut varier en fonction du type de plateforme que l'on souhaite réaliser.

Par ailleurs, le placement des modules logiciel et le routage des chemins topologiques doivent en général satisfaire à certaines contraintes décrites plus loin. On distingue les contraintes fonctionnelles des contraintes non fonctionnelles. Les contraintes non fonctionnelles ont généralement pour objet de modéliser l'association entre les éléments de la structure fonctionnelle de la plateforme et les éléments de sa structure matérielle, par exemple l'association entre les modules logiciels et les terminaux qui les hébergent. Les contraintes fonctionnelles sont induites par les éléments de la structure fonctionnelle, par exemple la ségrégation/collocation de chemins topologiques associés à un même lien fonctionnel ou la ségrégation/collocation de terminaux hébergeant certains modules logiciel. Les contraintes fonctionnelles de ségrégation ont pour but d'assurer un haut degré de robustesse des différentes fonctions vis-à-vis d'une défaillance pouvant affecter tel ou tel élément de la plateforme. A l'inverse les contraintes fonctionnelles de collocation ont pour but de partager certaines ressources matérielles de la plateforme et de causer des pannes franches. Par panne franche on entend une panne dont les effets sont bien déterminés.

On comprendra que le balayage systématique de toutes les combinaisons possibles d'occurrences d'équipement, de chemins topologiques, de liaisons physiques etc. présenterait une complexité rédhibitoire, sans pour autant garantir que les contraintes seraient nécessairement satisfaites et les critères optimisés.

L'idée à la base de l'invention est de traduire les contraintes précitées sous la forme d'inéquations linéaires et les critères d'optimisation comme des expressions linéaires de variables de décision. Par inéquation linéaire on englobe également le cas particulier d'une équation linéaire.

Comme nous le verrons plus loin, la minimisation des fonctions de coût peut se faire soit conjointement soit successivement. Dans le premier cas, on pourra utiliser une fonction de coût composite obtenue comme combinaison linéaire desdites fonctions de coût à l'aide de coefficients de pondération. Les valeurs de ces coefficients reflètent l'importance respective des critères dans la recherche de la solution optimale.

L'ensemble des inéquations linéaires définit un convexe et plus précisément un polytope dans un espace de dimension $N$ où $N$ est le nombre de variables de décision. Le problème d'optimisation peut alors être élégamment résolu grâce à l'algorithme du simplexe. On rappelle que l'algorithme du simplexe permet de résoudre un problème du type :

$$\mathrm{Argmin}_{\mathbf{x}}(\mathbf{b^T x}) \quad \text{avec } \mathbf{AX} \geq \mathbf{c} \quad \text{et } \mathbf{x} \geq \mathbf{0} \qquad (1)$$

où $\mathbf{b^T}$ est le vecteur représentatif d'une forme linéaire (fonction de coût), $\mathbf{x}$ est le vecteur représentatif des variables de décision (positives), $\mathbf{A}$ représente la matrice des contraintes et $\mathbf{c}$ est un vecteur constant.

Certaines contraintes ne s'expriment pas naturellement de manière linéaire mais sous une forme logique. Il est alors nécessaire d'utiliser des théorèmes de linéarisation tels qu'exposé en annexe. Il y sera fait référence lors de l'exposé des contraintes.

La formulation des contraintes fait appel aux constantes suivantes :

**nrjTab** : ensemble des sources d'énergie présentes sur la plateforme avionique ;

**sideTab :** ensemble des côtés de l'aéronef, par conséquent côté gauche et côté droit ;

**neoTab :** ensemble des noeuds de communication. On rappelle qu'un noeud de communication est une occurrence d'équipement particulier. Chaque élément *neo* de cet ensemble est défini par les attributs suivantes :

- *ne* : référence à l'équipement (élément de **neTab**) dont *neo* est une occurrence ;
- *symId* : référence à l'élément de **neoTab** lié à *neo* par une relation de symétrie (*cf. infra*) ;
- *symMirId* : référence à l'élément de **neoTab** lié à *neo* par une relation de symétrie de chemin (cf. *infra*) ;
- *dupId* : référence à l'élément de **mirEoTab** lié à *neo* par une relation de duplication ;
- *conLevel* : niveau de connexion de *neos* (*cf. infra*) ;
- *conNb* : nombre de ressources de connexion déjà utilisées pour relier *neo* à d'autres noeuds de communication ;
- *side* : côté de l'aéronef auquel *neo* est rattaché ;
- *njrs* : liste des sources d'énergie alimentant *neo.*

**neTab** : ensemble des équipements dont au moins une des occurrences appartient à **neoTab ;**

**pathTab :** ensemble des chemins réseau autorisés. Un chemin *p* de cet ensemble est défini par une liste ordonnée d'éléments de l'ensemble **neoTab.** On introduit les constantes suivantes :

- *pathEoFirst[p,neo]* prenant la valeur 1 si *neo* est le premier noeud de communication de *p* et la valeur 0 sinon ;
- *pathEoLast[p,neo]* prenant la valeur 1 si *neo* est le dernier noeud de communication de *p* et la valeur 0 sinon ;
- *pathEo[p,neo]* prenant la valeur 1 si *neo* $\in$ *p* et la valeur 0 sinon.

**ceoTab :** ensemble des occurrences d'équipement qui ne sont pas des noeuds de communication, c'est-à-dire qui sont des terminaux. Chaque élément *ceo* de cet ensemble est défini par les attributs suivants :

- *ce* : référence à l'équipement (élément de **ceTab**) dont *ceo* est une occurrence ;
- *symId* : référence à l'élément de **ceoTab** lié à *ceo* par une relation de symétrie (*cf. infra*) ;
- *side :* coté de l'aéronef auquel *ceo* est rattaché.

**ceTab :** ensemble des équipements dont au moins une occurrence appartient à **ceoTab.** Chaque élément *ce* de cet ensemble possède les attributs suivants :

- *ceos* : ensemble des références aux éléments de **ceoTab** représentant les occurrences de l'élément *ce* ;
- *cpuQtt* : ressource en puissance de calcul associé à chaque occurrence de *ce* ;
- *ramQtt* : ressource en taille de RAM associé à chaque occurrence de *ce* ;
- *romQtt* : ressource en taille de ROM associé à chaque occurrence de *ce* ;
- *nvmeQtt* : ressource en taille de mémoire non volatile ou NVME (disque dur) associé à chaque occurrence de ce.

De manière plus générale, on introduit la constante **resTypeTab** donnant l'ensemble des types de ressources matérielles associées à une occurrence d'équipement, par exemple CPU, RAM, ROM, NVME, etc. Dans ce cas, à chaque élément *ce* de **ceTab** on peut faire correspondre des attributs restTypeQtt[*resType*] indiquant pour chaque type *resType* appartenant à **resTypeTab** la quantité de ressource matérielle de type *resType* associée à chaque occurrence de *ce.*

**foTab** : ensemble des occurrences de modules logiciel. Chaque élément *fo* de cet ensemble est défini par les attributs suivants :

- *f* : référence au module logiciel (élément de **fTab**) dont *fo* est une occurrence ;
- *cpuCost* : quantité de processeurs nécessaire au module logiciel *fo* ;
- *ramCost* : quantité de RAM nécessaire au module logiciel *fo* ;
- *romCost* : quantité de ROM nécessaire au module logiciel *fo* ;
- *nvmeCost* : espace de disque dur nécessaire au module logiciel *fo* ;
- *cpuRes* : ensemble des références aux équipements (terminaux) de **ceoTab** autorisés à héberger le module logiciel *fo ;*
- *netRes* : ensemble des références aux éléments de **neoTab** auxquels un terminal hébergeant *fo* est autorisé à être relié par une liaison physique.

De manière similaire à **ceTab,** on peut introduire une liste d'attributs restTypeCost[*resType*] indiquant pour chaque type de ressource *resType* appartenant à **resTypeTab** la quantité de ressource matérielle de type *resType* nécessaire au module logiciel *fo.*

**fTab** : ensemble des classes « module logiciel » dont au moins une occurrence appartient à **foTab.** Chaque élément *f* de cet ensemble est défini par un attribut *fos* donnant la liste des références aux modules logiciel (éléments de **foTab**) qui sont des occurrences de *f* ;

**froTab** : ensemble des occurrences de lien fonctionnel. Chaque élément de *fro* de cet ensemble est défini par les attributs suivants :

- *fr* : référence au lien fonctionnel (élément de **frTab**) dont *fro* est une occurrence ;
- *fromFo* : référence à l'élément *fo* de **foTab** représentant l'occurrence de module logiciel émettrice de *fro* ;
- *toFo* : référence à l'élément *fo* de **foTab** représentant l'occurrence de module logiciel destinataire de *fro.*

**frTab** : ensemble des classes de lien fonctionnel dont au moins une occurrence appartient à **froTab.** Chaque élément *fr* de cet ensemble est défini par les attributs suivants :

- *fros* : ensemble des références aux éléments de **froTab** qui sont des occurrences de *fr* ;
- *txNetRes* : ensemble des références aux éléments de **neoTab** représentant les noeuds de communication autorisés à être empruntés en premier par tout chemin *p* de **pathTab** implémentant une occurrence du lien fonctionnel *fr* ;
- *rxNetRes* : ensemble des références aux éléments de **neoTab** représentant les noeuds de communication autorisés à être empruntés en dernier par tout chemin *p* de **pathTab** implémentant une occurrence du lien fonctionnel *fr.*

Ces premières définitions étant données, nous envisagerons successivement l'association des occurrences de lien fonctionnel aux chemins topologiques et le placement des occurrences de module logiciel dans les terminaux.

**Association de chemins topologiques aux liens fonctionnels :**

A chaque occurrence de lien fonctionnel, on associe au moins un chemin topologique. Ce chemin topologique peut être direct ou indirect, comme indiqué plus haut.

Nous considérerons ci-après les chemins indirects. Un chemin indirect est constitué d'un chemin réseau, (élément de **pathTab**), d'une première liaison physique entre l'occurrence d'équipement source et un premier noeud

**6**

réseau et d'une seconde liaison physique entre l'occurrence d'équipement destinataire et un second noeud réseau.

Le choix des première et seconde liaisons physiques est respectivement guidé par l'occurrence de module logiciel source et l'occurrence de module logiciel destinataire de l'occurrence de lien fonctionnel.

Soit une occurrence de module logiciel *fo*. Ce module logiciel est relié à d'autres modules logiciels par des occurrences de lien fonctionnel *fro*. On associe à *fo* un ensemble de noeuds de communication **neofo** tel que :

- les chemins associés aux occurrences de lien fonctionnel *fro* émises par *fo* passent en premier par l'un des éléments de **neofo** ;
- les chemins associés aux occurrences de lien fonctionnel *fro* reçues par *fo* passent en dernier par l'un des éléments de **neofo** ;
- toute occurrence d'équipement *ceo* hébergeant *fo* est connectée à tous les noeuds de communication *neo* appartenant à **neofo.**

On obtient ainsi une constellation de noeuds de communication, et donc de liaisons physiques, pour chaque possibilité d'hébergement de *fo* par un terminal *ceo*.

Afin de traduire cette association sous forme de contraintes, on introduit les variables de décision suivantes :

- *foCon*[*fo,neo*] qui vaut 1 si l'élément *fo* de **foTab** est associé à l'élément *neo* de **neoTab** et 0 sinon ;
- *ceoCon*[*ceo,neo*] qui vaut 1 si l'élément *ceo* de **ceoTab** est connecté à l'élément *neo* de **neoTab ;**
- *ceoConFo*[*ceo,neo, fo*] variable intermédiaire permettant de lier *foCon* et *foMap* (cf. infra) à *ceoCon*.
  et l'on impose les contraintes suivantes :

Contrainte 1 :

$$\forall fo \in \mathbf{foTab}, \ \forall neo \in \mathbf{neoTab} \quad \texttt{tel} \quad \texttt{que} \quad ceo \notin fo.netRes,$$

$$foCon[fo,neo] = 0$$

$$(2)$$

Contrainte 2 :

$\forall fo \in \mathbf{foTab}, \forall neo \in \mathbf{neoTab}$ on applique la contrainte (iv) (cf. Annexe Théorème II) avec :

$$d_1 = \sum_{\substack{fro \in \mathbf{Ffrom} \\ p \in \mathbf{Pfirst}}} froPath[fro,p] + \sum_{\substack{fro \in \mathbf{Fto} \\ p \in \mathbf{Plast}}} froPath[fro,p]$$

$$(3\text{-}1)$$

où :

**Ffrom** = {*fro* ∈ **froTab**|*fro.fromFo = fo*},
**Fto** = {*fro* ∈ **froTab**|*fro.toFo = fo*},
**Pfirst** = {*p* ∈ **pathTab**|*first*(*p*) = *neo*},
**Plast** = {p ∈ **pathtab**|*last*(*p*) = *neo*},
*froPath*[*fro,p*] est une variable de décision décrite *infra* valant 1 si l'élément *fro* de **froTab** est associé à l'élément *p* de pathTab et 0 sinon.
et avec

$$d_2 = foCon[fo, neo]$$

$$(3-2)$$

et

$$\max(d_1) = 2 \times Card(\mathbf{froTab}) \times Card(\mathbf{pathTab}) + 1$$

$$(3-3)$$

Contrainte 3 :

$\forall fo \in \mathbf{foTab},\ \forall neo \in \mathbf{neoTab},\ \forall ceo \in \mathbf{ceoTab}$ on applique la contrainte (vii) (cf. Annexe, Théorème IV) avec :

$$d_1 = foMap[fo, ceo]$$

$$(4-1)$$

$$d_2 = foCon[fo, neo]$$

$$(4-2)$$

$$d_3 = ceoConfo[ceo, neo, fo]$$

$$(4-3)$$

Contrainte 4 :

$\forall neo \in \mathbf{neoTab},\ \forall ceo \in \mathbf{ceoTab},$ on applique la contrainte (iv) (cf. Annexe, Théorème II), avec :

$$d_1 = \sum_{fo \in \mathbf{foTab}} ceoConFo[ceo, neo, fo]$$

$$(5-1)$$

$$d_2 = ceoCon[ceo, neo]$$

$$(5-2)$$

$$\text{et}\ \max(d_1) = Card(\mathbf{foTab}) + 1$$

$$(5-3)$$

Les liaisons physiques possibles entre terminaux et noeuds de communication ayant été recensées, on cherche à associer au moins un chemin réseau à chaque occurrence de lien fonctionnel. Ainsi l'occurrence de lien fonctionnel pourra être implémentée à l'aide d'un chemin topologique incluant ce chemin réseau et des liaisons physiques précitées.

La recherche des chemins réseau possibles s'effectue de la manière suivante :

A chaque occurrence de lien fonctionnel *fro,* on pourra associer un chemin réseau *p* de **pathTab** si :

- le premier noeud de communication de *p*, noté txNeo, est à la fois dans *fro.fr.txNetRes* et *fro.fromFo.netRes ;*

- le dernier noeud de communication de *p*, noté *rxNeo,* est à la fois dans *fro.fr.rxNetRes* et *fro.toFo.netRes.*

Afin de traduire l'association d'un chemin réseau à une occurrence de lien fonctionnel, on introduit les variables de décision suivantes :

- *froPath*[*fro,p*] qui vaut 1 si l'élément *fro* de **froTab** est associé à l'élément *p* de **pathTab** et 0 sinon ;
  et, pour distinguer l'association de l'occurrence de lien fonctionnel à un chemin direct ou indirect :
- *froDirect*[*fro*] qui vaut 1 si l'élément *fro* de **froTab** est associé à un chemin topologique direct et 0 sinon.

On impose alors les contraintes suivantes pour traduire l'association en question :

Contrainte 5 :

$\forall fro \in$ **froTab,**

$$\sum_{\substack{p \in \mathbf{pathTab} \\ txNeo \in \mathbf{Tfro} \\ rxNeo \in \mathbf{Rto}}} froPath\,[fro,p] \times pathEofirst[p,txNeo] \times pathEoLast[p,rxNeo]$$

$$+ \, froDirect[fro] \geq 1$$

$$(6)$$

où **Tfro** = *fro.fromFo.netRes* $\cap$ *fro.fr.txNetRes* et **Rto** = *fro.toFo.netRes* $\cap$ *fro.fr.rxNetRes*

Contrainte 6 :

$\forall fro \in$ **froTab**

$$\sum_{\substack{p \in \mathbf{pathTab} \\ p \in \overline{\mathbf{Tfro} \cup \mathbf{Rto}}}} froPath\,[fro,p] = 0$$

$$(7)$$

où **Tfro** = *fro.fromFo.netRes* $\cup$ *fro.fr.txNetRes* et **Rto** = *fro.toFo.netRes* $\cup$ *fro.fr.rxNetRes* $\overline{A}$ est l'ensemble complémentaire de *A*.

Afin de simplifier la recherche des chemins réseau, on tire avantageusement profit de certaines relations de symétrie au sein de la plateforme avionique.

Un premier cas de symétrie est celui où un réseau est dupliqué et de manière plus générale répliqué un certain nombre de fois pour assurer à certaines transmissions une plus grande robustesse vis-à-vis d'une défaillance d'un noeud de réseau. Par exemple, un terminal source et un terminal destinataire pourront être chacun abonnés à deux réseaux AFDX de même structure. A tout noeud du réseau A correspond de manière biunivoque un noeud du réseau B, dénommé noeud dupliqué. De la même façon, à tout chemin dans le réseau A passant par une pluralité de noeuds réseau est associé de manière biunivoque un chemin dans le réseau B passant par les noeuds dupliqués correspondants. Le terminal source abonné aux deux réseaux envoie un message sous forme de deux trames identiques au terminal destinataire. Ce dernier conserve la première trame qui lui parvient et élimine la même trame qui lui parvient en second.

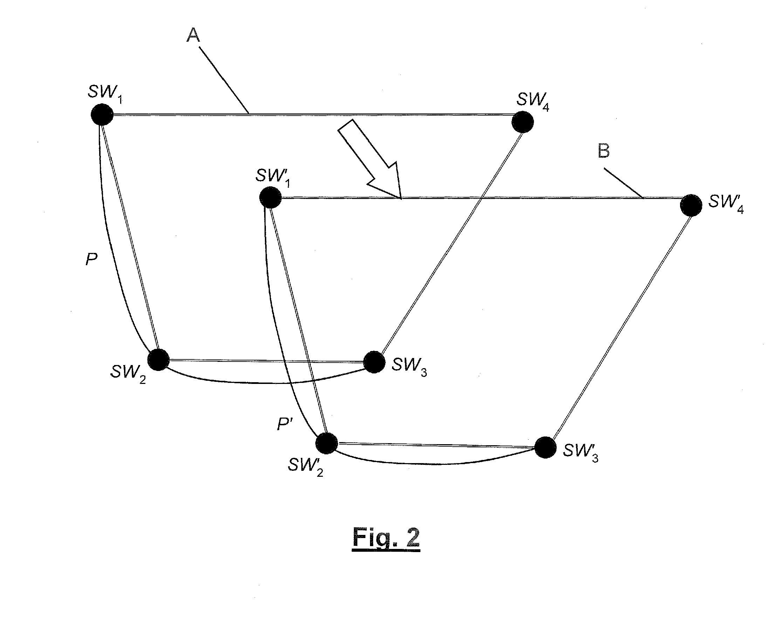

La Fig. 2 représente deux réseaux AFDX, A et B, associés par une opération de duplication. Les commutateurs (noeuds de commutation) $SW_1$ à $SW_4$ sont obtenus par duplication des commutateurs $SW_1$ à $SW_4$. De la même façon au chemin réseau $P$ passant par les noeuds $SW_1$, $SW_2$, $SW_3$ correspond le chemin réseau dupliqué $P'$ passant par les noeuds de réseau $SW'_1$, $SW'_2$, $SW'_3$.

Afin de modéliser cette relation de duplication, on introduit la constante suivante :

**mirEoTab** : ensemble de noeuds obtenus par duplication de noeuds appartenant à l'ensemble **neoTab.** Un noeud *meo* de **mirEoTab** est défini par les attributs :

- *neo* : référence au noeud de **neoTab** ayant été dupliqué ;
- *side* : côté de l'aéronef auquel *meo* est rattaché ;
- *nrjs* : liste des sources d'énergie pouvant alimenter *meo.*

La recherche des chemins est simplifiée au sens où les noeuds de communication obtenus par une opération de duplication ne sont pas pris en compte pour l'association à une occurrence de lien fonctionnel. On considère en effet que si un chemin réseau est associé à une telle occurrence, le chemin réseau dupliqué est également associé à cette occurrence.

Dans la suite nous désignerons par noeud de type multiple un noeud ayant fait l'objet d'au moins une duplication au sens ci-dessus.

Un deuxième cas de symétrie concerne un couple de noeuds de réseau. Deux noeuds sont dits symétriques si pour tout chemin, associé à un lien fonctionnel, passant par l'un de ces noeuds, il existe au moins un autre chemin, associé à ce même lien fonctionnel et passant par l'autre noeud. Cet autre chemin réseau est alors dénommé symétrique du premier.

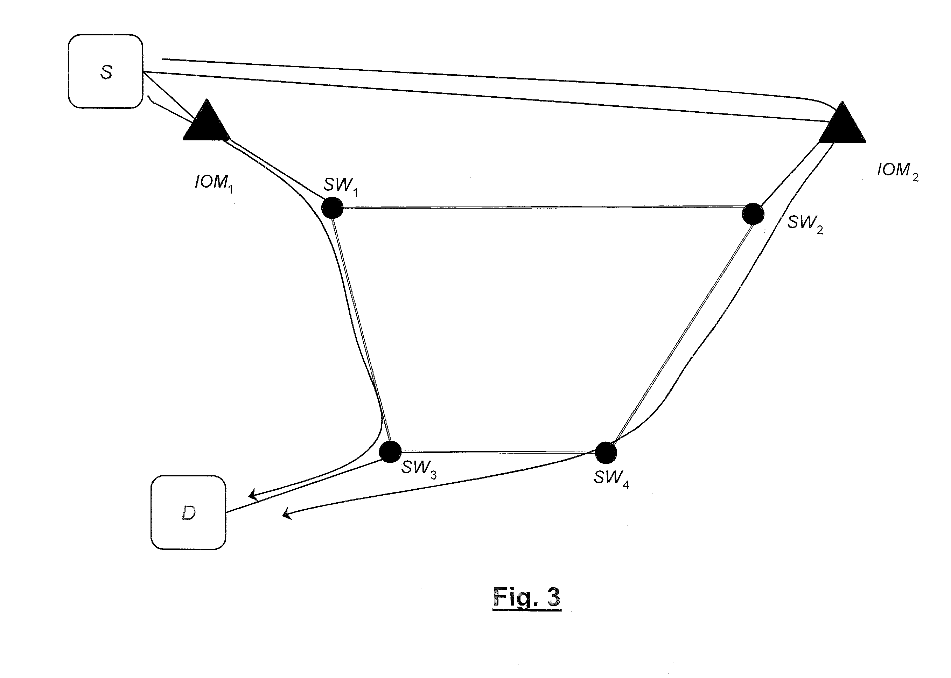

La Fig. 3 représente schématiquement la situation de deux noeuds de réseau symétriques. Un premier chemin $P$ relie un terminal source $S$ à un terminal destinataire $D$ en passant par les noeuds $IOM_1$, $SW_1$, $SW_3$ . Les noeuds $IOM_1$ et $IOM_2$ sont symétriques l'un de l'autre : il existe plusieurs chemins passant par $IOM_2$ permettant de relier $S$ et $D$, par exemple $IOM_2$, $SW_2$, $SW_1$, $SW_3$ et $IOM_2$, $SW_2$, $SW_4$, $SW_3$.

Afin de modéliser cette relation de symétrie, on introduit les constantes suivantes :

**pathSymTab[p]** : table associant au chemin réseau $p$ de **pathTab** l'ensemble des chemins réseau de **pathTab** symétriques de $p$. Si $p$ ne passe par aucun noeud de communication ayant un symétrique, l'ensemble **pathSymTab [p]** est vide.

**pathSymMir[p]** : vaut 1 si le chemin réseau $p$ passe par un noeud ayant un symétrique, et 0 sinon.

La relation de symétrie se traduit alors par la contrainte :

Contrainte 7 :

$$froPath[fro,p] + pathSymMir[p]$$

$$\leq 1 + \sum_{pSym \in \mathbf{pathSymTab[p]}} froPath[fro, Psym]$$

$$(8)$$

Un noeud présentant un symétrique au sens ci-dessus sera désigné dans la suite comme noeud de type miroir.

**Hébergement des modules logiciel :**

Nous considérerons ci-après le placement des occurrences de module logiciel *fo* dans les terminaux *ceo.*

Cette opération de placement consiste à rechercher pour chaque occurrence de module logiciel *fo* un et un seul terminal *ceo* capable de l'héberger. En revanche, un terminal *ceo* peut héberger plusieurs occurrences de module logiciel.

On rappelle qu'un terminal *ceo* ne peut héberger une occurrence de module logiciel *fo* si *ceo* n'appartient pas à l'ensemble *fo.CpuRes.*

Afin de modéliser l'opération de placement, on introduit la variable de décision :

**foMap[fo,ceo]** qui vaut 1 si l'élément *fo* de **foTab** est hébergé par le terminal *ceo* de **ceoTab** et 0 sinon, et l'on définit les contraintes suivantes :

Contrainte 8 :

$\forall fo \in$ **foTab,**

$$\sum_{\substack{ceo \in \mathbf{ceoTab} \\ ceo \notin fo.cpuRes}} foMap\,[fo, ceo] = 0$$

$$(9)$$

Contrainte 9 :

$\forall fo \in$ **foTab,**

$$\sum_{\substack{ceo \in \mathbf{foTab} \\ ceo \in fo.cpuRes}} foMap\,[fo, ceo] = 1$$

$$(10)$$

Il convient en outre de modéliser les associations entre les occurrences d'équipement et les sources d'énergie. En effet, à chaque occurrence d'équipement, que ce soit un terminal ou un noeud de communication, doit être associée au moins une source d'énergie pour être alimenté. Les associations des sources d'énergie aux noeuds de communication sont des constantes. En revanche, les associations des sources d'énergie aux terminaux sont des variables de décision. Si un terminal *ceo* est connecté à un noeud de communication *neo* qui est de type multiple, alors *ceo* ne peut être associé à une autre source d'énergie qu'une source d'énergie associée à *neo* ou son dupliqué *meo.* En revanche, si un terminal *ceo* est connecté à un noeud de communication *neo* qui n'est pas de type multiple, alors *ceo* doit être associé à une des sources d'énergie associées à *neo.*

L'association d'une source d'énergie à une occurrence d'équipement peut être modélisée en définissant les constantes suivantes :

**neoNrj[neo,nrj]** (déduite de la table **neoTab**) qui vaut 1 si l'élément *neo* de **neoTab** est associé à l'élément *nrj* de **nrjTab** et 0 sinon ;

**meoNrj[meo,nrj]** (déduite de la table **mirEoTab**) qui vaut 1 si l'élément *meo* de **mirEoTab** est associé à l'élément *nrj* de **nrjTab** et 0 sinon ;

et l'on introduit les variables de décision suivantes :

- *ceoNrj*[*ceo,nrj*] qui vaut 1 si l'élément *nrj* de **nrjTab** est associé à l'élément *ceo* de **ceoTab** et 0 sinon ;
- *ceoIsCon*[*ceo*] vaut 1 si l'élément *ceo* de **ceoTab** est connecté à un élément *neo* de **neoTab,** 0 sinon

On définit alors les contraintes suivantes pour modéliser l'association :

Contrainte 10 :

$\forall ceo \in$ **ceoTab,** on applique la contrainte (iv) (cf. Annexe, Théorème II), avec :

$$d_1 = \sum_{neo \in \mathbf{neoTab}} ceoCon[ceo, neo]$$

$$(11-1)$$

$$d_2 = ceoIsCon[ceo]$$

$$(11-2)$$

et max($d_1$) = Card(***neoTab***) + 1

Contrainte 11 :

$\forall ceo \in$ **ceoTab,** $\forall nrj \in$ **nrjTab,**

$$ceoNrj[ceo, nrj]$$
$$\leq 1 - ceoIsCon[ceo]$$
$$+ \left( \sum_{neo \in \mathbf{neoTab}} ceoCon[ceo, neo] \times neoNrj[neo, nrj] \right)$$
$$+ \left( \sum_{\substack{neo \in \mathbf{neoTab} \\ meo \in \mathbf{miroTab} \\ meo.neo = neo}} ceoCon[ceo, neo] \times meoNrj[meo, nrj] \right)$$

$$(12)$$

Contrainte 12 :

$\forall ceo \in$ **ceoTab,**

$$\sum_{nrj \in \mathbf{nrjTab}} ceoNrj[ceo, nrj] \geq 1$$

$$(13)$$

**Contraintes d'origine fonctionnelle** :

Les contraintes 1 à 12 ont pour but de modéliser l'association entre les occurrences de lien fonctionnel et les chemins topologiques possibles d'une part, et l'association entre occurrences de module logiciel et occurrence d'équipement, d'autre part. Nous allons maintenant décrire les contraintes d'origine fonctionnelle imposées aux chemins, dénommées ci-après contraintes fonctionnelles.

Un premier type de contrainte fonctionnelle est une contrainte de collocation d'occurrences de lien fonctionnel. Elle consiste à spécifier que les chemins réseau associés à une pluralité d'occurrences de lien fonctionnel doivent emprunter exactement la même liste de noeuds de communication. On évite ainsi la dispersion des chemins réseau pour une pluralité d'occurrences de lien fonctionnel et l'on obtient des pannes franches au sens où tous les liens fonctionnels colloqués sont simultanément perdus.

Afin de pouvoir modéliser cette contrainte de collocation, on définit la constante :

**froColTab** : ensemble des contraintes de collocation d'occurrences de lien fonctionnel. Chaque élément *frocol* de **froColTab** a pour attribut *frol*, liste des occurrences de lien fonctionnel assujetties à une même contrainte de collocation ;
et l'on introduit la variable de décision suivante :

*froPathEo*[*fro,neo*] qui vaut 1 si l'occurrence de lien fonctionnel *fro* est associée à un chemin passant par le noeud de communication *neo,* et 0 sinon.

La contrainte de collocation peut alors d'exprimer par le jeu de contraintes suivantes sur les variables de décision :

Contrainte 13 :

∀*fro* ∈ **froTab,** ∀*neo* ∈ **neoTab**
on applique la contrainte (iv) (cf. Annexe, Théorème II), avec :

$$d_1 = \sum_{p \in \mathbf{pathTab}} froPath[fro, p] \times pathEo[p, neo]$$

$$(14-1)$$

$$d_2 = froPathEo[fro, neo]$$

$$(14-2)$$

$$\mathrm{et}\ \max(d_1) = Card(\mathbf{pathTab}) + 1$$

Contrainte 14 :

$$\forall froCol \in \mathbf{froColTab}, \quad \forall fro1, fro2 \in froCol.frol \text{ tels que } fro1 \neq fro2$$

$$\forall neo \in \mathbf{neoTab}$$

$$froPathEo[fro1, neo] = froPathEo[fro2, neo]$$

$$(15)$$

Au lieu de spécifier une contrainte de collocation, il peut s'avérer nécessaire au contraire d'obliger une pluralité d'occurrences de lien fonctionnel à passer par des chemins réseau empruntant des noeuds de communication distincts. On s'assure ainsi que la défaillance d'un noeud de communication n'impactera qu'au plus l'une des occurrences de lien fonctionnel.

Afin de modéliser cette contrainte, on définit la constante :

**froSegTab:** ensemble des contraintes de ségrégation d'occurrences de lien fonctionnel. Chaque élément *froSeg* de **froSegTab** est défini avec l'attribut *frol* donnant la liste des occurrences de lien fonctionnel à ségréguer.

La contrainte de ségrégation peut alors s'exprimer sous la forme suivante :

Contrainte 15 :

$$\forall froSeg \in \mathbf{froSegTab}, \quad \forall neo \in \mathbf{neoTab},$$

$$\sum_{fro \in froSeg.frol} froPath\,Eo[fro, neo] \leq 1$$

$$(16)$$

Le placement des occurrences de module logiciel sur les occurrences d'équipement peut être également assujetti à des contraintes d'origine fonctionnelle. Par exemple, il peut être pertinent de prévoir que deux occurrences de module logiciel soient placées dans des terminaux nécessairement identiques (contrainte de collocation) ou au contraire distincts (contrainte de ségrégation). Ce second cas trouve sa justification dans le fait que la défaillance d'un calculateur générique n'affectera pas simultanément l'exécution des ces deux modules. Dans d'autres types de situation, il peut être pertinent de placer deux occurrences de module logiciel dans des terminaux symétriques ou a *contrario* dans des terminaux non symétriques. Enfin, il peut s'avérer également utile de placer les deux occurrences de module logiciel d'un même côté de l'aéronef ou bien au contraire sur des côtés opposés.

Soit deux occurrences de module logiciel quelconques *fo1* et *fo2* respectivement hébergées sur deux terminaux *ceo1* et *ceo2.* Pour chaque type de contrainte précitée, on définit une constante :

**foCstTypeTab** : ensemble des contraintes relatives au type de contrainte en question. Chaque élément *foCstType* de **foCstTypeTab** possède un attribut *fol,* liste des occurrences de module logiciel concernées par la contrainte.

La contrainte de collocation implique que les terminaux *eo1* et *eo2* soient identiques. Elle peut s'exprimer par :

**14**

Contrainte 16 :

$$\forall \, foCstType \, \in \, \textbf{foCstTypeTab},$$

$$\forall \, fo1, fo2 \, \in \, foCstType.fol \text{ tels que } fo1 \neq fo2$$

$$\forall ceo \in \textbf{ceoTab}$$

$$froMap[fo1, ceo] = froMap[fo2, ceo]$$

$$(17)$$

La contrainte de ségrégation implique que les terminaux *eo1* et *eo2* soient distincts. Elle peut s'exprimer par :

Contrainte 17 :

$$\forall \, foCstType \, \in \, \textbf{foCstTypeTab},$$

$$\forall ceo \in \textbf{ceoTab}$$

$$\sum_{fo \in foCstTyp.fol} foMap[fo, ceo] \leq 1$$

$$(18)$$

La contrainte de placement sur des noeuds symétriques implique que les terminaux *ceo1* et *ceo2* soient symétriques au sens où ils sont liés par l'attribut *symId*.

Contrainte 18 :

$$\forall \, foCstType \, \in \, \textbf{foCstTypeTab},$$

$$\forall \, fo1, fo2 \, \in \, foCstType.fol \text{ tels que } fo1 \neq fo2$$

$$\forall \, ceo1, ceo2 \, \in \, \textbf{ceoTab} \text{ tels que } ceo2 = ceo1.symId$$

$$foMap[fo1, ceo1] = foMap[fo2, ceo2]$$

$$(19)$$

*A contrario,* la contrainte de placement sur des noeuds non symétriques implique que les terminaux *ceo1* et *ceo2* ne soient symétriques, à savoir :

Contrainte 19 :

$$\forall foCstType \in \mathbf{foCstTypeTab},$$
$$\forall fo1, fo2 \in foCstType.fol \text{ tels que } fo1 \neq fo2$$
$$\forall ceo1, ceo2 \in \mathbf{ceoTab} \text{ tels que } ceo2 = ceo1.symId$$
$$foMap[fo1, ceo1] + foMap[fo2, ceo2] \leq 1$$

$$(20)$$

La contrainte de placement des occurrences de module logiciel sur un même côté s de l'aéronef, dite aussi contrainte de latéralité, peut être formalisée en introduisant la variable de décision :

   *foMapSicle*[*fo,s*] qui vaut 1 si l'élément *fo* de **foTab** est placé sur un terminal *ceo* de **ceoTab** associé au côté *s* de l'aéronef et 0 sinon.

La contrainte de latéralité s'exprime par le jeu des deux contraintes suivantes :

Contrainte 20 :

$\forall fo \in$ **foTab**
$\forall s \in$ **sidetab**

$$foMapSide[fo, s] = \sum_{\substack{ceo \in \mathbf{ceoTab} \\ ceo.side=s}} foMap[fo, ceo]$$

$$(21)$$

Contrainte 21 :

$\forall foCstType \in$ **foCstTypeTab,**
$\forall fo1, fo2 \in foCstType.fol$ tels que $fo1 \neq fo2$
$\forall s \in$ **sideTab**

$$foMapSide[fo1, s] = foMapSide[fo2, s]$$

$$(22)$$

*A contrario,* pour une contrainte de bilatéralité, c'est-à-dire si les occurrences de module logiciel doivent être situées sur des côtés opposés de l'aéronef, la contrainte suivante est à respecter :

Contrainte 22 :

$\forall foCstType \in$ **foCstTypeTab**
$\forall\, s \in$ **sideTab**

$$\sum_{fo \in foCstTyp.fol} foMap\,Side[fo,s] \leq 1$$

$$(23)$$

Il peut être aussi intéressant de spécifier que deux terminaux hébergeant deux occurrences de module logiciel doivent être alimentés par la même source d'énergie ou bien au contraire être alimentés par des sources d'énergie distinctes. Dans le second cas, on évite qu'une panne d'alimentation d'une source puisse simultanément affecter l'exécution des deux occurrences de module logiciel.

A cet effet, on définit les variables de décision :

**foNrjCeo[fo, nrj, ceo]** qui vaut 1 si l'élément *nrj* de **nrjTab** est associé au terminal *ceo* de **ceoTab** et que le module logiciel *fo* de **foTab** est placé sur *ceo,* 0 sinon ;

**foNrj[fo, nrj]** qui vaut 1 si le module logiciel *fo* de **foTab** est placé sur un terminal de **ceoTab** qui est associé à l'élément *nrj* de **nrjTab,** 0 sinon.

Soient *fo1* et *fo2* deux occurrences quelconques de module logiciel, on peut imposer que les terminaux *ceo1* et *ceo2* hébergeant respectivement *fo1* et *fo2* soient alimentés par la même source d'énergie en respectant les trois contraintes suivantes :

Contrainte 23 :

$\forall ceo \in$ **ceoTab**
$\forall fo \in$ **foTab**
$\forall nrj \in$ **nrjTab**
on applique la contrainte (viii) (cf. Annexe, Théorème IV), avec :

$$d_1 = ceoNrj[ceo, nrj] \qquad\qquad (24-1)$$

$$d_2 = foMap[fo, ceo] \qquad\qquad (24-2)$$

et

$$\text{et } d_3 = foNrj[fo, nrj, ceo] \qquad\qquad (24-3)$$

Contrainte 24 :

∀*fo* ∈ **foTab**
∀ *nrj* ∈ **nrjTab**
on applique la contrainte (iv) (cf. Annexe, Théorème II), avec :

$$d_1 = \sum_{ceo \in \mathbf{ceoTab}} foNrjCeo\left[fo, nrj, ceo\right]$$

$$(25-1)$$

$$d_2 = foNrj[fo, nrj]$$

$$(25-2)$$

$$\text{et } \max(d_1) = Card(\mathbf{ceoTab}) + 1$$

Contrainte 25:

∀ *foCstType* ∈ **foCstTypeTab,**
∀ *fo1, fo2* ∈ *foCstType.fol* tels que *fo*1 ≠ *fo*2
∀ *nrj* ∈ **nrjTab**

$$foNrj[fo1, nrj] = foNrj[fo2, nrj] \qquad (26)$$

*A* contrario, imposer que deux terminaux *ceo1* et *ceo2* hébergeant respectivement deux modules logiciels *fo1* et *fo2* distincts soient alimentés par des sources d'énergie distinctes revient à respecter la contrainte suivante :

Contrainte 26 :

$$\forall foCstType \in \mathbf{foCstTypeTab},$$

$$\forall nrj \in \mathbf{nrjTab},$$

$$\sum_{fo \in foCstType.fol} fo\,Nrj[fo, nrj] \leq 1$$

$$(27)$$

Une autre contrainte fonctionnelle vise à placer deux occurrences de module logiciel sur un même terminal ou bien au contraire sur deux terminaux distincts.
La contrainte de collocation sur un même terminal s'exprime par :

Contrainte 27 :

$\forall$ *foCstType* $\in$ **foCstTypeTab,**
$\forall$ *fo1, fo2* $\in$ *foCstType.fol* tels que *fo*1 $\neq$ *fo*2
$\forall$ ce $\in$ **ceTab**

$$\sum_{ceo \in ce.cos} foMap[fo1, ceo] = \sum_{ceo \in ce.cos} foMap[fo2, ceo]$$

$$(28)$$

La contrainte de ségrégation des occurrences de module logiciel vis-à-vis des terminaux peut à l'inverse s'exprimer par :

Contrainte 28 :

$$\forall foCstType \in \mathbf{foCstTypeTab}$$

$$\forall ce \in \mathbf{ceTab}$$

$$\sum_{\substack{fo \in foCstType.fol \\ ceo \in ce.cos}} fo\,Map[fo, ceo] \le 1$$

$$(29)$$

Nous avons passé en revue les contraintes fonctionnelles pouvant être imposées aux chemins réseau et aux terminaux, il reste à considérer les contraintes fonctionnelles pouvant affecter les liaisons entre les terminaux et les noeuds de communication.

Soit *neol1* l'ensemble des noeuds de **neoTab** auxquels est connecté *ceo1,* et *neol2* l'ensemble des éléments de **neoTab** auxquels est connecté *ceo2.*

On définit localement à chaque type de contrainte, la constante :

**foCstTypeTab** : ensemble des contraintes relatives au type de contrainte en question. Chaque élément foCstType de **foCstTypeTab** possède un attribut *fol,* liste des occurrences de modules logiciel concernées par cette contrainte.

On distingue comme précédemment les contraintes de collocation et de ségrégation, de symétrie et d'asymétrie, de latéralité et de bilatéralité.

La contrainte de collocation impose que les ensembles de noeuds *neol1 et neol2* sont identiques, c'est-à-dire :

Contrainte 29 :

$\forall$ *foCstType* $\in$ **foCstTypeTab,**
$\forall$ *fo1, fo2* $\in$ *foCstType.fol* tels que *fo*1 $\neq$ *fo*2
$\forall$ *neo* $\in$ **neoTab**

$$foCon[fo1, neo] = foCon[fo2, neo]$$

$$(30)$$

La contrainte de ségrégation impose que les ensembles de noeuds *neol1* et de *neol2* sont disjoints, à savoir :

Contrainte 30 :

$\forall$ *foCstType* $\in$ **foCstTypeTab,**

$$\forall neo \in \mathbf{neoTab}$$

$$\sum_{fo \in foCstType.fol} foCon[fo, neo] \leq 1$$

$$(31)$$

La contrainte de symétrie des noeuds de connexion implique que, pour tout noeud de *neol1,* son symétrique soit dans *neol2* et réciproquement. Cela suppose a *fortiori* que tous les noeuds de *neol1* et *neol2* aient un symétrique, c'est-à-dire :

Contrainte 31 :

$\forall$ *foCstType* $\in$ **foCstTypeTab**
$\forall$ *fo* $\in$ *foCstType.fol*
$\forall$ *neo* $\in$ **neoTab** tel que *neo.symId* n'est pas défini :

$$foCon[fo, neo] = 0 \qquad (32)$$

et, pour exprimer la symétrie des noeuds de *neol1* et *neol2*:

Contrainte 32 :

$\forall$ *foCstType* $\in$ **foCstTypeTab,**
$\forall$ *fo*1,*fo*2 $\in$ *foCstType.fol* tels que *fo*1 $\neq$ *fo*2
$\forall$ *neo*1, *neo*2 $\in$ **neoTab** tels que *neo*2 = *neo*1. *symId*

$$foCon[fo1, neo1] = foCon[fo2, neo2] \qquad (33)$$

La contrainte d'asymétrie des noeuds de connexion suppose comme précédemment que chaque noeud de *neol1* et *neol2* aient un symétrique, autrement dit que la contrainte 32 soit respectée et, d'autre part que tout symétrique d'un noeud de *neol1* n'appartiennent pas à *neol2* et réciproquement, c'est-à-dire :

Contrainte 33 :

$\forall$ *foCstType* $\in$ **foCstTypeTab,**
$\forall$ *fo*1, *fo*2 $\in$ *foCstType.fol* tels que *fo*1 $\neq$ *fo*2
$\forall$ *neo*1,*neo*2 $\in$ **neoTab** tels que *neo*2 = *neo*1.*symId*

$$foCon[fo1, neo1] + foCon[fo2, neo2] \leq 1 \qquad (34)$$

La contrainte de latéralité des noeuds de connexion implique que :

- l'ensemble des éléments de *neol1* (respectivement *neol2*) sont associés au même côté avion *s1* (respectivement *s2*)
- les côtés *s1* et *s2* sont identiques

Pour modéliser cette contrainte, on introduit la variable de décision suivante :

*foConSide*[*fo,*s] qui vaut 1 si l'occurrence de module logiciel *fo* de **foTab** est placée sur un terminal *ceo* de **ceoTab** connecté à au moins un noeud *neo* de **neoTab** associé au côté s de **sideTab,** 0 sinon

La contrainte de latéralité des noeuds de connexion s'exprime alors par le jeu des trois contraintes suivantes:

Contrainte 34 :

$\forall$ *fo* $\in$ **foTab**
$\forall$ *s* $\in$ **sideTab**
on applique la contrainte (iv) (cf. Annexe, Théorème II), avec :

$$d_1 = \sum_{\substack{neo \in \textbf{neoTab} \\ neo.side=s}} foCon\,[fo, neo]$$

$$(35-1)$$

$$d_2 = foConSide[fo, s] \qquad (35-2)$$

$$\text{et } \max(d_1) = Card(\textbf{neoTab}) + 1$$

Contrainte 35 :

$\forall\, foCstType \in \textbf{foCstTypeTab}$
$\forall\, fo \in foCstType.fol$

$$\sum_{s\, \in\, \textbf{sideTab}} foCon\,Side[fo, s] \leq 1$$

$$(36)$$

Contrainte 36 :

$\forall\, foCstType \in \textbf{foCstTypeTab,}$
$\forall\, fo1, fo2 \in foCstType.fol$ tels que $fo1 \neq fo2$
$\forall\, s \in \textbf{sideTab}$

$$foConSide[fo1, s] = foConSide[fo2, s] \qquad (37)$$

La contrainte de bilatéralité des noeuds de connexion implique que :

- l'ensemble des éléments de *neol1* (respectivement *neol2*) sont associés au même côté avion *s1* (respectivement s2)
- les côtés *s1* et *s2* sont différents

La modélisation de cette contrainte utilise d'une part la contrainte 35 donnée ci-dessus (indiquant que tous les noeuds connectés à une occurrence de module logiciel *fo* sont du même côté), ainsi que la contrainte spécifique :

Contrainte 37 :

$\forall\, foCstType \in \textbf{foCstTypeTab,}$
$\forall\, s \in \textbf{sideTab}$

$$\sum_{fo\, \in\, foCstType.fol} foCon\,Side[fo, s] \leq 1$$

$$(38)$$

Nous considérerons ci-après un dernier type de contraintes permettant de fixer certains choix, par exemple d'imposer qu'une occurrence donnée de lien fonctionnel passe par tel ou tel chemin topologique, direct ou indirect, ou encore qu'une occurrence donnée de module logiciel soit hébergée par tel ou tel terminal. L'intérêt d'imposer de telles contraintes est de pouvoir figer des options d'implémentation qui ont été déjà validées par l'expérience ou d'éviter de remettre en cause une partie déjà implémentée. Par exemple, si une plateforme avionique déjà réalisée fait l'objet d'un développement ultérieur, il peut être judicieux de ne pas remettre en cause toute ou partie de l'implémentation.

Nous considérerons tout d'abord les contraintes de choix fixé relatives aux occurrences de lien fonctionnel. A cet effet on définit la constante suivante :

**fixFroPathTab :** ensemble des contraintes permettant d'imposer un choix de placement d'une occurrence de lien fonctionnel sur un chemin topologique (direct ou indirect). Chaque élément *fixFroPath* de **fixFroPathTab** est défini a pour attributs :

- *fro* : référence à l'occurrence de lien fonctionnel de **froTab** dont on veut imposer le placement ;
- *p* : chemin indirect que l'on veut imposer à *fro*.
  Ce champ peut ne pas être défini si le choix de chemin n'est pas fixé;
- direct : vaut 1 si on impose un chemin direct à *fro,* 0 si on impose un chemin indirect.

Pour imposer un choix de routage de lien fonctionnel, on impose les contraintes suivante :

Contrainte 38 :

$\forall$ *fixFroPath* $\in$ **fixFroPathTab** tel que *fixFroPath.p* est défini

$$froPath[fixFroPath.fro, fixFroPath.p] = 1 \qquad (39)$$

Contrainte 39 :

$\forall$ *fixFroPath* $\in$ **fixFroPathTab** tel que *fixFroPath.direct* = 1

$$froDirect[fixFroPath.fro] = 1 \qquad (40)$$

On peut aussi imposer le choix du placement d'occurrences de module logiciel dans certains terminaux prédéterminés. Pour ce faire, on définit la constante suivante :

**fixFoCeoTab:** ensemble des contraintes permettant d'imposer un choix de placement d'une occurrence de module logiciel dans un terminal. Chaque élément *fixFoCeo* de **fixFoCeoTab** possède les attributs suivants :

- *fo* : référence à l'élément de **foTab** dont on veut imposer le placement ;
- *ceo* : référence à l'élément de **ceoTab** sur lequel on veut imposer le placement de *fo*. Ce champ peut ne pas être défini, si ce choix n'est pas fixé ;
- *side* : référence à un élément de **sideTab.** Cette référence indique que le terminal *ceo* sur laquelle on va placer l'occurrence de module logiciel *fo* soit associée à ce côté. Ce champ peut ne pas être défini si le choix de côté n'est pas fixé.

L'imposition du choix de placement des occurrences de module logiciel est réalisée au moyen des contraintes suivantes :

Contrainte 40 :

∀ *fixFoCeo* ∈ **fixFoCeoTab** tel que le champ *ceo* est défini

$$foMap[fixFoCeo.fo, fixFoCeo.ceo] = 1 \qquad (41)$$

Contrainte 41 :

∀ *fixFoCeo* ∈ **fixFoCeoTab** tel que le champ *side* est défini

$$foMapSide[fixFoCeo.fo, fixFoCeo.side] = 1 \qquad (42)$$

On peut également fixer le choix des connexions entre un terminal hébergeant une occurrence de module logiciel et un ou des noeud(s) de communication. Plus précisément, soit *fo* une occurrence de module logiciel de **foTab** et *neo* un élément de **neoTab.** On dit que *fo* est connectée à *neo,* s'il existe un terminal *ceo* de **ceoTab** tel que *fo* est placée sur *ceo* et *ceo* est connecté à neo.

Un niveau de connexion est associé à chaque noeud de communication, au moyen de l'attribut *conLevel* dans **neoTab** (cf. supra). Cet attribut permet de distinguer par exemple des commutateurs de réseau AFDX, des hubs (ou micro-commutateurs) AFDX, ou encore des passerelles. On définit alors les constantes suivantes :

- **fixCeoNeoTab** : ensemble des contraintes permettant de fixer la connexion d'un terminal à un noeud de communication. Chaque élément *fixCeoNeo* de **fixCeoNeoTab** est défini avec les attributs suivants :

  ○ *ceo* : référence à l'élément de **ceoTab** auquel on veut fixer la connexion ;
  ○ *neo* : référence à l'élément de **neoTab** auquel on veut fixer la connexion ;
  ○ *flag* : vaut 1 si on veut imposer que *ceo* et *neo* soient connectés, 0 si on veut imposer que *ceo* et *neo* ne soient pas connectés ;

- **fixFoNeoSideTab** : ensemble des contraintes permettant d'imposer la connexion d'une occurrence de module logiciel à un noeud de communication associé à un côté donné. Chaque élément *fixFoNeoSide* de **fixFoNeoSideTab** est défini avec les attributs :

  ○ *fo* : référence à l'élément de **foTab** considéré ;
  ○ *side* : référence à l'élément de **sideTab** considéré ;

  - **foConLevelMaxTab** ensemble des contraintes permettant de fixer un nombre maximal de connexions entre une occurrence de module logiciel et des noeuds de communication ayant un niveau de connexion donné. Chaque élément de **foConLevelMax** de foConLevelMaxTab est défini avec les attributs suivants:

    ○ *fo* : référence à l'élément de **foTab** considéré
    ○ *conLevel* : niveau de connexion considéré
    ○ *conMax* : nombre maximal de connexions entre *fo* et des noeuds de communication *ceo* ayant un niveau de connexion *conLevel.*

L'imposition des connexions à des noeuds de communication est alors réalisée à l'aide des quatre contraintes suivantes :

Contrainte 42 :

$\forall$ *fixCeoNeo* $\in$ **fixCeoNeoTab** tel que *fixCeoNeo.flag* = 1

$$ceoCon[fixCeoNeo.ceo, fixCeoNeo.neo] = 1 \qquad (43)$$

Contrainte 43 :

$\forall$ *fixCeoNeo* $\in$ **fixCeoNeoTab** tel que *fixCeoNeo.flag* = 0

$$ceoCon[fixCeoNeo.ceo, fixCeoNeo.neo] = 0 \qquad (44)$$

Contrainte 44 :

$\forall$ *fixFoNeoSide* $\in$ **fixFoNeoSideTab**

$$foConSide[fixFoNeoSide.fo, fixFoNeoSide.side] = 1 \qquad (45)$$

Contrainte 45 :

$\forall$ *foConLevelMax* $\in$ *foConLevelMaxTab*

$$\sum_{\substack{neo \in \textbf{neoTab} \\ neo.conLevel = foConLevelMaxConLevel}} foCon[foConLevelMax.fo, neo]$$

$$\leq foConLevelMax.conMax$$

$$(46)$$

Enfin, on peut vouloir imposer que certains équipements soient alimentés par telle ou telle source d'énergie. A cet effet, on définit la constante suivante :

**fixCeoNrjTab :** ensemble des contraintes permettant de fixer l'association d'un terminal à une source d'énergie. Chaque élément *fixCeoNrj* de **fixCeoNrjTab** a les attributs suivants :

- *ceo* : référence au terminal de **ceoTab** concerné ;
- *nrj* : référence à la source d'énergie de **nrjTab** concernée ;
- *flag* : vaut 1 si on veut imposer que *nrj* alimente *ceo,* 0 si on veut imposer que *nrj* ne l'alimente pas.

L'imposition d'alimentation des équipements en question s'exprime par les contraintes suivantes :

Contrainte 46 :

$$\forall \; fixCeoNrj \in fixCeoNrjTab \; \text{tel que } fixCeoNrj.flag = 1$$

$$ceoNrj[fixCeoNrj.ceo, fixCeoNrj.nrj] \; = \; 1 \qquad\qquad (47)$$

Contrainte 47 :

$$\forall \; fixCeoNrj \in fixCeoNrjTab \; \text{tel que } fixCeoNrj.flag = 0$$

$$ceoNrj[fixCeoNrj.ceo, fixCeoNrj.nrj] = 0 \qquad\qquad (48)$$

Nous avons vu dans cette première partie comment l'on peut traduire sous forme de contraintes sur des variables de décision les conditions d'implémentation matérielle des modules logiciel et des occurrences de lien fonctionnel dans la plateforme avionique.

L'optimisation de l'implémentation dans le respect de ces contraintes ou de certaines d'entre elles seulement se fait en minimisant un certain nombre de fonctions de coût s'exprimant comme des combinaisons linéaires des variables de décision déjà introduites, ou bien de nouvelles variables de décision qui seront introduites plus loin.

Nous décrirons dans cette seconde partie les critères d'optimisation et leurs fonctions de coût associées. Il est important de noter que ces fonctions de coût peuvent être minimisées conjointement ou bien successivement. Par exemple, la minimisation d'une première fonction de coût peut fournir un ensemble de solutions d'implémentation possibles. La minimisation d'une seconde fonction sur ce premier ensemble de coût fournit un sous-ensemble de ce premier sous-ensemble.

Un premier critère d'optimisation consiste à minimiser le nombre de terminaux connectés à plusieurs noeuds de communication, autrement dit on cherche dans la mesure du possible à réduire le nombre de connexions multiples des terminaux au(x) réseau(x).

Ce premier critère d'optimisation se traduit par la minimisation de fonction de coût suivante :

Fonction de coût 1 :

$$CF_1 = \sum_{ceo \, \in \, \mathbf{ceoTab}} \left[ \sum_{neo \, \in \, \mathbf{neoTab}} ceoCon[ceo, neo]) - ceoIsCon[ceo] \right]$$

$$(49)$$

Un second critère d'optimisation vise à utiliser en priorité à chaque fois que c'est possible des noeuds de communication à faible niveau de connexion. Par exemple pour un terminal capable de communiquer avec un commutateur AFDX et avec une passerelle, on peut privilégier la connexion au commutateur. De manière similaire pour un terminal capable de communiquer avec un hub (micro-commutateur) AFDX et un commutateur on privilégiera la connexion au micro-commutateur. Par hypothèse on attribuera à la passerelle un niveau de connexion supérieur à celui du commutateur AFDX, lui-même supérieur à celui du micro-commutateur AFDX.

Ce second critère d'optimisation se traduit par la minimisation de fonction de coût suivante :

Fonction de coût 2 :

$$CF_2 = \sum_{ceo \in \mathbf{ceoTab}} \sum_{neo \in \mathbf{neoTab}} ceoCon[ceo, neo] \times neo.\,conLevel$$

$$(50)$$

Un troisième critère d'optimisation vise à minimiser pour un type d'équipement donné, c'est-à-dire un élément *ne* de **neTab,** le nombre maximum de connexions associées à une occurrence quelconque *neo* de *ne*.

On introduit la variable de décision suivante :

*neConMax*[*ne*] : vaut pour l'élément *ne* de **neTab,** le nombre maximum de connexions atteint par l'un des éléments *ne.neos*. Par définition cette variable de décision doit vérifier la contrainte suivante :

Contrainte 48 :

$\forall ne \in$ **neTab**

$\forall\ neo \in\ ne.neos$

$$neConMax[ne] \geq neo.\,conNb + \sum_{ceo \in \mathbf{ceoTab}} ceoCon[ceo, neo]$$

$$(51)$$

L'optimisation de ce troisième critère revient à minimiser la fonction de coût suivante :

Fonction de coût 3 :

$$CF_3 = \sum_{ne \in \mathbf{neTab}} neConMax[ne]$$

$$(52)$$

Un quatrième critère d'optimisation vise à connecter un terminal *ceo* de **ceoTab** au noeud de communication *neo* le plus proche en termes de distance réelle. Pour ce faire, on définit la constante suivante :

**ceoNeoCost[ceo,neo]:** donne le coût (valeur proportionnelle à la distance réelle) associé à la connexion du terminal *ceo* de **ceoTab** au noeud neo de **neoTab.**

L'optimisation de ce quatrième critère revient à minimiser la fonction de coût suivante :

Fonction de coût 4 :

$$CF_4 = \sum_{ceo \in \mathbf{ceoTab}} \sum_{neo \in \mathbf{neoTab}} ceoCon[ceo, neo] \times ceoNeoCost[ceo, neo]$$

$$(53)$$

Un cinquième critère d'optimisation vise à minimiser le nombre de sources d'énergie associées à un même terminal. On évite ainsi la multiplication des lignes d'alimentation, seules étant conservées celles nécessaires à l'indépendance d'exécution des occurrences de module logiciel hébergées par les terminaux.

L'optimisation de ce critère revient à minimiser la fonction de coût suivante :

Fonction de coût 5 :

$$CF_5 = \sum_{ceo \in \mathbf{ceoTab}} \sum_{nrj \in \mathbf{nrjTab}} ceoNrj[ceo, nrj]$$

$$(54)$$

Un sixième critère d'optimisation vise à optimiser les besoins en ressources des différents terminaux. Plus précisément, ce critère permet de minimiser pour un type de terminal *ce* de **ceTab,** les besoins maximaux en ressources matérielles (puissance de calcul CPU, taille de ROM, taille de RAM, taille de NVME (mémoire non volatile par ex. disque dur)) dont a besoin un terminal *ceo* de type *ce* (*ceo* est une occurrence de *ce*).

Pour ce faire, on introduit les variables de décision suivantes :

- *ceoResCostType*[*ceo,resType*] : donne pour chaque type de ressource *resType* (CPU, RAM, ROM, NVME etc.) la quantité totale de ce type de ressource utilisée par les modules logiciel hébergés par *ceo* ;
- *ceCostMax*[*ce*] : donne pour le type de terminal *ce* le maximum (en pourcentage) des ressources utilisées au niveau de l'un des terminaux de ce type *ce.ceos* ;

On définit les contraintes suivantes :

Contrainte 49 :

$\forall$ *ceo* $\in$ **ceoTab**
$\forall$ *resType* $\in$ **resTypeTab**

$$ceoResTypeCost[ceo, resType]$$

$$= \sum_{fo \in \mathbf{foTab}} foMap[fo, ceo] \times fo.resTypeCost[resType]$$

$$(55)$$

Contrainte 50 :

$\forall \, ce \in \mathbf{ceTab}$
$\forall \, ceo \in ce. \, ceos$
$\forall \, resType \in resTypeTab$

$$ceCostMax[ce] \geq 100 \times \frac{ceoResTypeCost[ceo, resType]}{ce.resTypeQtt[resType]}$$

$$(56)$$

L'optimisation du sixième critère revient à minimiser la fonction de coût suivante :

Fonction de coût 6 :

$$CF_6 = \sum_{ce \in \mathbf{ceTab}} ceCostMax[ce]$$

$$(57)$$

On peut aussi spécifier que les terminaux des différents types ne peuvent utiliser qu'au maximum un pourcentage $\eta$% de leurs ressources respectives, autrement dit :

Contrainte 51 :

$$\forall \, ce \in \mathbf{ceTab}$$

$$ceCostMax[ce] \leq \eta$$

$$(58)$$

Un cas particulier important correspond à $\eta$ = 100%, c'est-à-dire que les modules logiciels hébergés par un terminal de type donné ne peuvent utiliser plus que la totalité ressources dont dispose ce type de terminal.

Un septième critère vise à minimiser le nombre de des liens fonctionnels implémentés par des chemins topologiques directs entre terminaux. En effet, il est généralement préférable de passer par des chemins réseaux pour réduire le nombre de liaisons directes.

L'optimisation de ce critère revient à minimiser la fonction de coût suivante :

Fonction de coût 7 :

$$CF_7 = \sum_{fro \in \textbf{froTab}} froDirect[fro]$$

$$(59)$$

Un huitième critère vise à minimiser le nombre de chemins topologiques associés à un même lien fonctionnel.

L'optimisation de ce critère revient à minimiser la fonction de coût suivante :

Fonction de coût 8 :

$$CF_8 = \sum_{\substack{fro \in \textbf{froTab} \\ p \in \textbf{pathTab}}} froPath[fro, p]$$

$$(60)$$

Un neuvième critère d'optimisation vise à minimiser la longueur topologique des chemins indirects associés à un lien fonctionnel. On définit la longueur topologique d'un chemin (indirect) comme le nombre de noeuds de communication par lequel passe ce chemin.

L'optimisation de ce critère revient à minimiser la fonction de coût suivante :

Fonction de coût 9 :

$$CF_9 = \sum_{\substack{fro \in \textbf{froTab} \\ p \in \textbf{pathTab}}} froPath[fro, p] \times card(p)$$

$$(61)$$

Un dixième critère d'optimisation vise à minimiser le nombre de noeuds de communication communs entre plusieurs chemins topologiques indirects associés à un même lien fonctionnel. Pour ce faire, on introduit les variables de décision suivantes :

- *neoNbPerFro*[*fro,neo*] égal au nombre de chemins associés au lien fonctionnel *fro* de **froTab,** passant par le noeud neo de **neoTab ;**

- *neoComInFro*[*fro,neo*] égal à 1 si le noeud *neo* de **neoTab** est commun entre au moins deux chemins associés au lien fonctionnel fro de **froTab.**

  et l'on définit les contraintes :

Contrainte 52 :

$\forall$ *fro* $\in$ **froTab**
$\forall$ *neo* $\in$ **neoTab**

$$neoNbPerFro[fro,neo] \ = \ \sum_{\substack{fro \, \in \, \mathbf{froTab} \\ p \, \in \, \mathbf{pathTab}}} froPath[fro,p] \times pathEo[p,neo])$$

$$(62)$$

Contrainte 53 :

$\forall$ *fro* $\in$ **froTab**
$\forall$ *neo* $\in$ **neoTab**
on applique la contrainte (ii) (cf. Annexe, Théorème I), avec :

$$c1 \ = \ neoNbPerFro[fro,neo]$$

$$d2 \ = \ 1$$

$$d1 \ = \ neoComInFro[fro,neo]$$

$$M \ = \ card(\mathbf{pathTab}) + 1$$

$$(63)$$

L'optimisation de ce critère revient à minimiser la fonction de coût suivante:

Fonction de coût 10 :

$$CF_{10} = \sum_{\substack{fro \,\in\, \mathbf{froTab} \\ p \,\in\, \mathbf{pathTab}}} neoComInFro[fro, neo]$$

$$(64)$$

Un onzième critère d'optimisation vise à minimiser le nombre de noeuds de communication communs entre plusieurs occurrences *fro* d'un même lien fonctionnel *fr*.

On introduit les variables de décision suivantes :

- *neoNbPerFr[fr,neo]* : vaut le nombre d'occurrences de l'élément *fr* de **frTab** passant par l'élément neo de **neoTab** ;
- *neoComInFr[fr,neo]* : vaut 1 si le noeud *neo* de **neoTab** est commun entre au moins deux occurrences associés de l'élément *fr* de **frTab** ;
  et l'on définit les contraintes suivantes :

Contrainte 54 :

$\forall$ *fr* $\in$ **frTab**
$\forall$ *neo* $\in$ **neoTab**

$$neoNbPerFr\,[fr, neo] = \sum_{fro \,\in\, fr.fros} froPathEo[fro, neo]$$

$$(65)$$

Contrainte 55 :

$\forall$ *fro* $\in$ **froTab**
$\forall$ *neo* $\in$ **neoTab**
on applique la contrainte (ii) (cf. Annexe, Théorème I), avec :

$$c1 = neoNbPerFr[fr, neo]$$

$$d2 = 1$$

$$d1 = neoComInFr[fr, neo]$$

$$M = card(\mathbf{froTab}) + 1$$

$$(66)$$

L'optimisation de ce critère revient à minimiser la fonction de coût suivante :

Fonction de coût 11 :

$$CF_{11} = \sum_{\substack{fr \in \mathbf{frTab} \\ neo \in \mathbf{neoTab}}} neoComInFr[fr, neo]$$

$$(67)$$

Un douzième critère d'optimisation vise à minimiser le nombre total de noeuds de communication utilisés par un lien fonctionnel. Pour ce faire, on introduit la variable de décision suivante :

*frNeo*[*fr*,*neo*] qui Vaut 1 si l'élément *fr* de **frTab** a au moins une de ses occurrences associée à un chemin passant par le noeud *neo* de **neoTab.**

On définit alors la contrainte suivante :

Contrainte 56 :

$\forall$ *fr* $\in$ **frTab**
$\forall$ *neo* $\in$ **neoTab**
on applique la contrainte (iv) (cf. Annexe, Théorème II), avec :

$$d1 = \sum_{fro\ dans\ fr.fros} froPathEo[fro, neo]$$

$$d2 = frNeo[fr, neo]$$

$$max\_d1 = card(\mathbf{foTab})$$

$$(68)$$

L'optimisation de ce critère revient à minimiser la fonction de coût suivante :

Fonction de coût 12 :

$$CF_{12} = \sum_{\substack{fr \in \mathbf{frTab} \\ neo \in \mathbf{neoTab}}} frNeo[fr, neo]$$

$$(69)$$

Enfin, un treizième critère d'optimisation vise à privilégier des chemins topologiques indirects, associés à une occurrence de lien fonctionnel reliant un module logiciel source et un module logiciel destinataire hébergés sur des terminaux situés sur des côtés différents de l'aéronef, opérant un changement de côté le plus tard possible. Ainsi, ces chemins restent le plus longtemps possible sur le côté de l'aéronef ou est hébergé le module logiciel source.

L'optimisation de ce critère revient à minimiser la fonction de coût suivante :

Fonction de coût 13 :

$$CF_{13} = \sum_{\substack{fro \in \mathbf{froTab} \\ p \in \mathbf{pathTab} \\ neo \in \{p \mid neo.side \neq first(p).side\}}} froPath[fro, p]$$

$$(70)$$

L'homme du métier comprendra que d'autres critères d'optimisation et donc d'autres fonctions de coût peuvent être envisagées sans pour autant sortir du cadre de la présente invention.

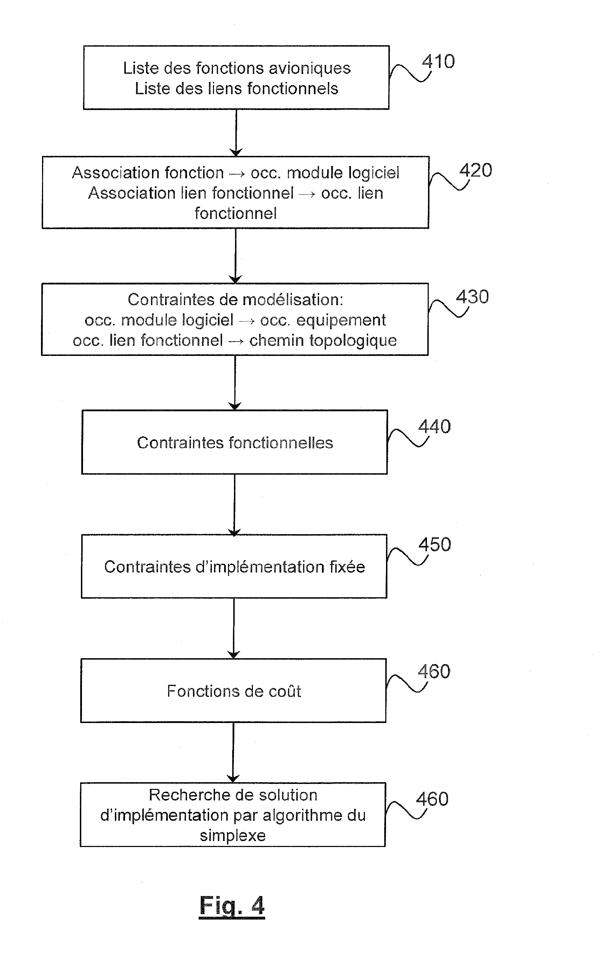

La Fig. 4 illustre la méthode d'optimisation de l'implémentation de plateforme avionique selon un mode de réalisation de l'invention.

Dans une première étape 410, on liste les fonctions avioniques et les liens fonctionnels entre ces fonctions.

Dans une seconde étape 420, on fait correspondre à chaque fonction un ou plusieurs modules logiciel (occurrences de module logiciel) permettant de réaliser ladite fonction. De manière similaire, à chaque lien fonctionnel, on fait correspondre une pluralité d'occurrences réalisant ce lien.

Dans une troisième étape 430, on modélise l'association entre occurrences de lien fonctionnel et chemins topologiques au moyen d'un premier jeu de contraintes (cf. contraintes 1-6), le cas échéant en tenant compte de certaines règles simplificatrices de symétrie et de duplication. De la même façon, on modélise l'association entre les modules logiciel et les occurrences d'équipement (terminaux) au moyen d'un second jeu de contraintes (contraintes 8-12). Le second jeu de contraintes peut permettre également d'associer à chaque occurrence d'équipement une ou plusieurs sources d'énergie (cf. contraintes 10-12).

Dans une quatrième étape 440, on spécifie un troisième jeu de contraintes dite fonctionnelles (contraintes 13-37), généralement de collocation ou de ségrégation portant sur les occurrences de liens fonctionnels (à l'aide de chemins réseau identiques ou disjoints) et les occurrences de modules logiciel (hébergés par des ensembles de terminaux identiques ou disjoints, eux-mêmes alimentés par des ensembles de sources d'énergie identiques ou disjoints). D'autres contraintes fonctionnelles peuvent être prévues sur certains noeuds (latéralité/ bilatérité, symétrie/asymétrie).

Dans une cinquième étape facultative 450, on spécifie un quatrième jeu de contraintes de choix fixé permettant de figer une partie de l'implémentation (contraintes 38-47).

Les contraintes précitées (1-47) sont exprimées sous forme d'inéquations faisant intervenir des combinaisons linéaires de variables de décision.

Dans une sixième étape, 460, on liste les critères que l'on souhaite optimiser (critères d'optimisation de l'implémentation de la plateforme) et les fonctions de coût correspondantes ($CF_1$ à $CF_{13}$). Certaines de ces fonctions de coût ($CF_2, CF_5, CF_9, CF_{10}, CF_{11}$) font intervenir de nouvelles variables de décision qui sont alors assujetties à un cinquième jeu de contraintes (48 ; 49-50 ; 52-53 ; 54-55 ; 56), également exprimées sous forme d'inéquations linéaires.

Dans un septième étape, 470, on recherche le ou les solution(s) optimales d'implémentation en utilisant l'algorithme du simplexe. L'optimisation sous contraintes peut se faire, comme on déjà dit, soit conjointement, soit successivement (fonction de coût par fonction de coût).

Lors d'une optimisation conjointe, les fonctions de coût sont simultanément minimisées sur l'ensemble des valeurs possibles des variables de décision. En revanche, lors d'une optimisation successive, seule une première fonction de coût est minimisée sur cet ensemble et chacune des autres fonctions est minimisée sur le sous-ensemble de valeurs possibles obtenues par minimisation d'une fonction de coût précédente.

En pratique, l'optimisation est effectuée à l'aide d'un logiciel exécuté par ordinateur. L'optimisation étant effectuée, on implémente la plateforme selon la ou une solution optimale déterminée à l'étape 470. L'étape d'implémentation consiste à prévoir les terminaux disposant des ressources déterminées par la solution optimale, à stocker dans ces terminaux les occurrences de module logiciel, le cas échéant à prévoir leur alimentation par les différentes sources d'énergie. Elle consiste aussi à prévoir les réseaux et les liaisons physiques, soit directement entre terminaux soit entre terminaux et noeuds de réseau, et à stocker les tables de routage/tables de commutation dans lesdits noeuds pour implémenter les chemins réseau.

### ANNEXE

**Théorème I :**

Soit $d_1$, $c_1$, $c_2$ trois variables de décision telles que :

$$Si \ c_1 > c_2 \ alors \ d_1 = 1, \ sinon \ d_1 = 0 \qquad (\text{i})$$

Cette relation logique peut s'exprimer à l'aide de l'inégalité linéaire suivante :

$$-(M + 1) + d_1(M + 1) + 1 \leq \ c_1 - c_2 \leq -d_1 M \qquad (\text{ii})$$

où $M$ vérifie $-M \leq c_1 - c_2 \leq M$

**Théorème II :**

Soit $d_1$, $d_2$ deux variables de décision telles que :

$$Si \ d_1 > 0 \ alors \ d_2 = 1, \ sinon \ d_2 = 0 \qquad (\text{iii})$$

Cette relation logique peut s'exprimer à l'aide des inégalités linéaires suivantes :

$$d_2 \leq d_1 \ et \ d_2 M \geq d_1 \qquad (\text{iv})$$

où $M$ vérifie $M > \max(d_1)$.

**Théorème III :**

Soit $d_1$, $d_2$, $d_3$ trois variables de décision telles que :

$$Si\ \ d_1 = 1\ \ alors\ \ d_3 = d_2,$$

$$Si\ \ d_1 = 0\ \ alors\ \ d_3 = 0 \qquad\qquad (\text{v})$$

Cette relation logique peut s'exprimer à l'aide des inégalités linéaires suivantes :

$$d_3 - d_2 \geq (d_1 - 1)M\ \ et\ \ d_3 \leq d_2\ \ et\ \ d_3 \leq Md_1 \qquad (\text{vi})$$

où $M$ vérifie $M > d_2$.

**Théorème IV :**

Soit $d_1, d_2, d_3$ trois variables de décision telles que :

$$Si\ \ d_1 = 1\ \ et\ d_2 = 1\ \ alors\ \ d_3 = 1,\ sinon\ \ d_3 = 0 \qquad (\text{vii})$$

Cette relation logique peut s'exprimer à l'aide des inégalités linéaires suivantes :

$$-d_1 + d_3 \leq 0\ \ et\ \ -d_2 + d_3 \leq 0\ \ et\ d_1 + d_2 - d_3 \leq 1 \qquad (\text{viii})$$

**Revendications**

1. Méthode d'optimisation, assistée par ordinateur, de la plateforme avionique d'un aéronef, ladite méthode étant destinée à implémenter un ensemble de fonctions avioniques, chaque fonction avionique étant associée à une ou plusieurs occurrences de module logiciel, deux occurrences de module logiciel quelconques pouvant échanger des messages au moyen d'un lien, dit occurrence de lien fonctionnel, ladite plateforme avionique comprenant par ailleurs des équipements reliés entre eux par des liaisons physiques unidirectionnelles ou bidirectionnelles appartenant à différents types de réseau, des chemins permettant de relier lesdits équipements, chaque chemin étant constitué soit par une seule liaison physique directe entre un équipement source et un équipement destinataire, soit par une première liaison physique entre ledit équipement source et un premier noeud de réseau, une seconde liaison physique entre ledit équipement destinataire et un second noeud de réseau et un chemin réseau entre lesdits premier et second noeuds, **caractérisée en ce que** l'on associe, d'une part, des occurrences de lien fonctionnel à des chemins destinés à implémenter ces occurrences, au moyen d'un premier jeu de contraintes et, d'autre part, des occurrences de modules logiciel à des équipements, destinés à héberger ces occurrences, au moyen d'un second jeu de contraintes, lesdites contraintes des premier et second jeux étant formulées comme des inéquations linéaires de variables de décision, et que l'on minimise une pluralité de fonctions de coût formulées comme des combinaisons linéaires d'au moins certaines desdites variables de décision pour obtenir au moins une solution optimale d'implémentation de la plateforme.

2. Méthode d'optimisation assistée par ordinateur, selon la revendication 1, **caractérisée en ce que** l'on associe également à chaque équipement une ou plusieurs source(s) d'énergie au moyen du dit second jeu de contraintes.

3. Méthode d'optimisation assistée par ordinateur, selon la revendication 1 ou 2, **caractérisée en ce que** l'on prévoit, préalablement à la minimisation des fonctions de coût, un troisième jeu de contraintes, formulées comme des inéquations linéaires de variables de décision, permettant de colloquer ou bien de ségréguer des occurrences de lien fonctionnel au moyen d'ensembles de chemins réseau respectivement identiques et disjoints.

4. Méthode d'optimisation assistée par ordinateur, selon la revendication 3, **caractérisée en ce que** le troisième jeu de contraintes permet de colloquer ou bien de ségréguer des occurrences de modules logiciel au moyen d'ensembles d'équipements respectivement identiques et disjoints.

5. Méthode d'optimisation assistée par ordinateur, selon la revendication 3 ou 4, **caractérisée en ce que** le troisième jeu de contraintes permet d'imposer que des occurrences de module logiciel sont hébergées par des équipements alimentés par des sources d'énergie identiques ou distinctes.

6. Méthode d'optimisation assistée par ordinateur, selon l'une des revendications précédentes, **caractérisée en ce que** l'on prévoit, préalablement à la minimisation des fonctions de coût, un quatrième jeu de contraintes, formulées comme des inéquations linéaires de variables de décision, permettant de fixer de manière préalable le passage d'une occurrence de lien fonctionnel par un chemin réseau donné, ou l'hébergement d'une occurrence de module logiciel par un équipement donné.

7. Méthode d'optimisation assistée par ordinateur, selon l'une des revendications précédentes, **caractérisée en ce que** les fonctions de coût sont minimisées conjointement sur un ensemble de valeurs possibles desdites variables de décision.

8. Méthode d'optimisation assistée par ordinateur, selon l'une des revendications précédentes, **caractérisée en ce que** les fonctions de coût sont minimisées successivement, une première fonction de coût étant minimisée sur l'ensemble des valeurs possibles desdites variables de décision et chacune des autres fonctions de coût étant minimisée sur le sous-ensemble desdites valeurs obtenu par minimisation d'une fonction de coût précédente.

9. Méthode d'optimisation assistée par ordinateur, selon les revendications 1, 3 et 6, **caractérisée en ce qu'**au moins une fonction de coût comprend une variable de décision supplémentaire n'intervenant pas dans l'ensemble des contraintes des premier, deuxième, troisième et quatrième jeux de contraintes, et que l'on prévoit un cinquième jeu de contraintes sous forme d'inéquation dépendant linéairement au moins de ladite variable de décision supplémentaire.

10. Méthode d'optimisation assistée par ordinateur, selon l'une des revendications précédentes, **caractérisée en ce que** lesdites fonctions de coût appartiennent à la liste suivante :

 - nombre d'équipements connectés à plusieurs réseaux de communication ;
 - combinaison pondérée des nombres de noeuds de communication de différents types ;
 - nombre maximum de connexions d'un noeud de communication ;
 - somme des distances réelles entre les équipements et les noeuds de communication auxquels ils sont connectés ;
 - nombre de sources d'énergie alimentant les différents équipements ;
 - somme des taux maximum d'utilisation des ressources des équipements par les occurrences de modules logiciel ;
 - nombre de chemins associés à un même lien fonctionnel ;
 - longueur topologique des chemins réseau associés à un même lien fonctionnel ;
 - nombre de noeuds de communication communs aux chemins réseau associés à un même lien fonctionnel ;

- nombre total de noeuds de communication utilisés par les chemins réseau associés à un même lien fonctionnel.

11. Méthode de réalisation d'une plateforme avionique, **caractérisée en ce que** l'on optimise l'architecture de la plateforme au moyen de la méthode d'optimisation selon l'une des revendications précédentes, et que l'on

- prévoit des terminaux disposant des ressources déterminées par la solution optimale ;
- stocke dans ces terminaux les occurrences de module logiciel.

12. Méthode de réalisation d'une plateforme avionique, selon la revendication 11, **caractérisée en ce que** l'on:

- prévoit les réseaux et les liaisons physiques, soit directement entre terminaux soit entre terminaux et noeuds de réseau ;
- on stocke les tables de routage/tables de commutation dans lesdits noeuds pour implémenter les chemins réseau déterminés par ladite solution optimale.

Fig. 1

**Fig. 2**

Fig. 3

```
┌─────────────────────────────────────┐
│   Liste des fonctions avioniques     │ ⟿ 410
│    Liste des liens fonctionnels      │
└─────────────────────────────────────┘
                  │
                  ▼
┌─────────────────────────────────────┐
│ Association fonction → occ. module   │ ⟿ 420
│ logiciel                             │
│ Association lien fonctionnel → occ.  │
│ lien fonctionnel                     │
└─────────────────────────────────────┘
                  │
                  ▼
┌─────────────────────────────────────┐
│      Contraintes de modélisation:    │ ⟿ 430
│ occ. module logiciel → occ. equipement│
│ occ. lien fonctionnel → chemin       │
│ topologique                          │
└─────────────────────────────────────┘
                  │
                  ▼
┌─────────────────────────────────────┐
│      Contraintes fonctionnelles      │ ⟿ 440
└─────────────────────────────────────┘
                  │
                  ▼
┌─────────────────────────────────────┐
│   Contraintes d'implémentation fixée │ ⟿ 450
└─────────────────────────────────────┘
                  │
                  ▼
┌─────────────────────────────────────┐
│          Fonctions de coût           │ ⟿ 460
└─────────────────────────────────────┘
                  │
                  ▼
┌─────────────────────────────────────┐
│       Recherche de solution          │ ⟿ 460
│  d'implémentation par algorithme du  │
│  simplexe                            │
└─────────────────────────────────────┘
```

## Fig. 4

Europäisches
Patentamt

European
Patent Office

Office européen
des brevets

**RAPPORT DE RECHERCHE EUROPEENNE**

Numéro de la demande

EP 10 16 1730

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | A. JHUMKA ET AL: "A Dependability-Driven System-Level Design Approach for Embedded Systems" ACM, 2 PENN PLAZA, SUITE 701 - NEW YORK USA, 31 décembre 2005 (2005-12-31), pages 1-6, XP040015556 Proceedings of the Design, Automation and Test in Europe * le document en entier * * page 3, colonne 1, dernier alinéa - page 3, colonne 2 * | 1-12 | INV. G06F17/50 |
| X | SIMON POULDING ET AL: "An Efficient Experimental Methodology for Configuring Search-Based Design Algorithms" HIGH ASSURANCE SYSTEMS ENGINEERING SYMPOSIUM, 2007. HASE '07. 10TH IEEE, IEEE, PISCATAWAY, NJ, USA, 1 novembre 2007 (2007-11-01), pages 53-62, XP031191526 ISBN: 978-0-7695-3043-7 * le document en entier * * page 53 - page 58, colonne 1, alinéa 2 * | 1-12 | |
| X | GIUSEPPE MONTANO ET AL: "Human involvement in dynamic reconfiguration of Integrated Modular Avionics" DIGITAL AVIONICS SYSTEMS CONFERENCE, 2008. DASC 2008. IEEE/AIAA 27TH, IEEE, PISCATAWAY, NJ, USA, 26 octobre 2008 (2008-10-26), pages 4.A.2-1, XP031372602 ISBN: 978-1-4244-2207-4 * le document en entier * * pages 4.A.2-8, colonne 2 - pages 4.A.2-10, colonne 2, alinéa 3 * | 1-12 | DOMAINES TECHNIQUES RECHERCHES (IPC) G06F |

-/--

Le présent rapport a été établi pour toutes les revendications

| Lieu de la recherche | Date d'achèvement de la recherche | Examinateur |
|---|---|---|
| Munich | 28 mai 2010 | Wellisch, J |

**EP 2 254 067 A1**

| | Europäisches Patentamt European Patent Office Office européen des brevets | **RAPPORT DE RECHERCHE EUROPEENNE** | Numéro de la demande EP 10 16 1730 |

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LAURENT SAGASPE ED - ANONYMOUS: "Constraint-based design and allocation of shared avionics resources" DIGITAL AVIONICS SYSTEMS CONFERENCE, 2007. DASC '07. IEEE/AIAA 26 TH, IEEE, PI, 1 octobre 2007 (2007-10-01), pages 2.A.5-1, XP031166293 ISBN: 978-1-4244-1107-8 * le document en entier * * pages 2-A.5-6, colonne 2, alinéa 2 - pages 2-A.5-7, colonne 1, dernier alinéa * ----- | 1-12 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 28 mai 2010 | Wellisch, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)